(19) Europäisches Patentamt
European Patent Office
Office européen des brevets

(11) **EP 4 509 874 A1**

(12) **EUROPEAN PATENT APPLICATION**
published in accordance with Art. 153(4) EPC

(43) Date of publication:
**19.02.2025 Bulletin 2025/08**

(21) Application number: **22937507.6**

(22) Date of filing: **15.04.2022**

(51) International Patent Classification (IPC):
**G01S 11/08** (2006.01)      **G01S 5/14** (2006.01)
**G01S 13/74** (2006.01)

(52) Cooperative Patent Classification (CPC):
**G01S 5/14; G01S 11/08; G01S 13/74**

(86) International application number:
**PCT/JP2022/017971**

(87) International publication number:
**WO 2023/199530 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **YOSHIOKA, Shohei**
  **Tokyo 100-6150 (JP)**
• **SHIBAIKE, Naoya**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND POSITIONING METHOD**

(57)   A terminal includes a transmission unit configured to transmit a signal for positioning in device-to-device direct communication to another terminal; a reception unit configured to receive a result of a measurement of the signal for positioning from the other terminal; and a control unit configured to assume that the result of the measurement is a difference between a reception timing of the signal for positioning in the other terminal and a reference time, wherein the control unit determines the reference time based on a synchronization source.

FIG.24

## Description

Technical Field

The present invention relates to a terminal and a positioning method in a wireless communication system.

Background Art

In long term evolution (LTE) and a succeeding system of LTE (for example, LTE Advanced (LTE-A) and new radio (NR) (also referred to as 5G)), a device to device (D2D) technology in which terminals perform direct communication without passing through a base station is being discussed (for example, Non-Patent Literature 1).

D2D reduces traffic between the terminal and the base station, and enables communication between the terminals even when the base station becomes incommunicable at the time of disaster or the like. Note that, in the 3rd generation partnership project (3GPP), D2D is referred to as "sidelink", but in the present specification, D2D, which is a more general term, is used. However, the term sidelink is also used as necessary in the description of the embodiment to be described later.

D2D communication is roughly divided into D2D discovery (also referred to as D2D discovery, D2D discovery) for discovering other communicable terminals and D2D communication (also referred to as D2D direct communication, D2D communication, device-to-device direct communication, and the like) for performing direct communication between the terminals. Hereinafter, the D2D communication, the D2D discovery, and the like are simply referred to as D2D when not particularly distinguished from each other. Further, a signal transmitted and received in D2D is referred to as a D2D signal. Various use cases of services related to vehicle to everything (V2X) in NR are being discussed (for example, Non-Patent Literature 2).

Citation List

Non-Patent Literature

Non-Patent Literature 1: 3GPP TS 38.211 V16.8.0 (2021-12)
Non-Patent Literature 2: 3GPP TR 22.886 V15.1.0 (2017-03)
Non-Patent Literature 3: 3GPP TS 38.305 V16.7.0 (2021-12)
Non-Patent Literature 4: 3GPP TS 38.455 V16.6.0 (2021-12)
Non-Patent Literature 5: 3GPP TS 37.355 V16.7.0 (2021-12)
Non-Patent Literature 6: 3GPP TS 23.032 V16.1.0 (2021-12)

Non-Patent Literature 7: 3GPP TS 38.215 V16.4.0 (2020-12)

Summary of Invention

Technical Problem

Positioning is being discussed in scenarios of device-to-device direct communication, for example, within coverage, partial coverage, and outside coverage, or in vehicle to everything (V2X), public safety, commercial, industrial Internet of Things (IIOT), and the like. However, a position estimation algorithm for acquiring position information of a device itself is not clear.

The present invention has been made in view of the above points, and an object of the present invention is to acquire position information of a device itself or another device.

Solution to Problem

According to the disclosed technology, a terminal is provided. The terminal includes:

a transmission unit configured to transmit a signal for positioning in device-to-device direct communication to another terminal;
a reception unit configured to receive a result of a measurement of the signal for positioning from the other terminal; and
a control unit configured to assume that the result of the measurement is a difference between a reception timing of the signal for positioning in the other terminal and a reference time,
wherein the control unit determines the reference time based on a synchronization source.

Advantageous Effects of Invention

According to the disclosed technology, position information of a device itself can be acquired.

Brief Description of Drawings

[Fig. 1] Fig. 1 is a diagram illustrating a wireless communication system.
[Fig. 2] Fig. 2 is a diagram illustrating V2X.
[Fig. 3] Fig. 3 is a diagram illustrating an example of communication in D2D.
[Fig. 4] Fig. 4 is a diagram illustrating an example (1) of positioning.
[Fig. 5] Fig. 5 is a diagram illustrating an example of measuring DL-RSTD.
[Fig. 6] Fig. 6 is a diagram illustrating an example of measuring UL-RTOA.
[Fig. 7] Fig. 7 is a diagram illustrating an example (2) of positioning.

[Fig. 8] Fig. 8 is a diagram illustrating an example of measuring RTT.

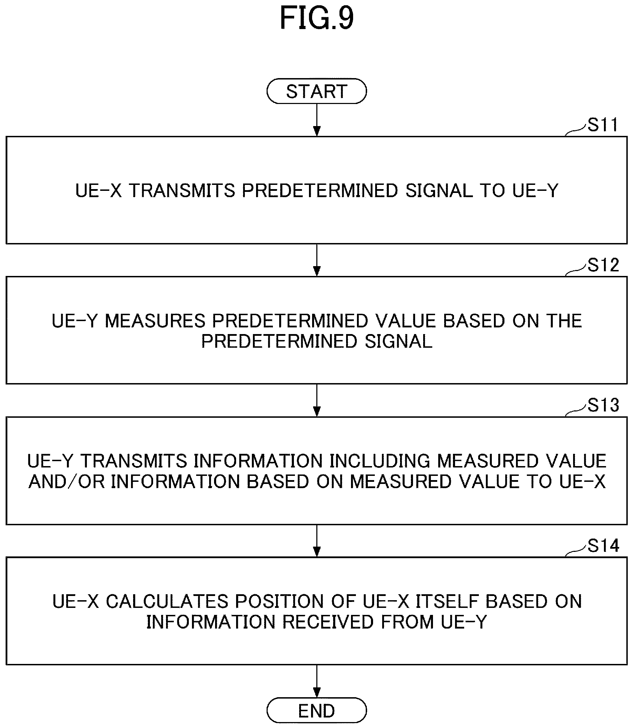

[Fig. ] Fig. 9 is a flowchart illustrating an example (1) of position estimation according to an embodiment of the present invention.

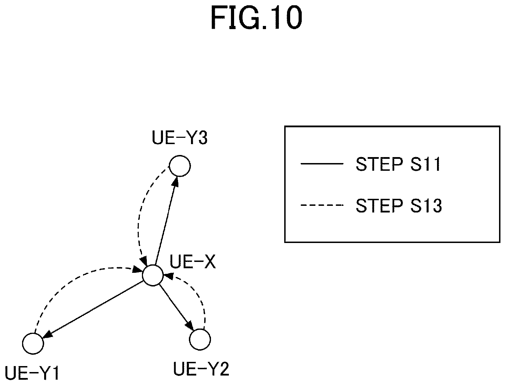

[Fig. 10] Fig. 10 is a diagram illustrating the example (1) of position estimation according to the embodiment of the present invention.

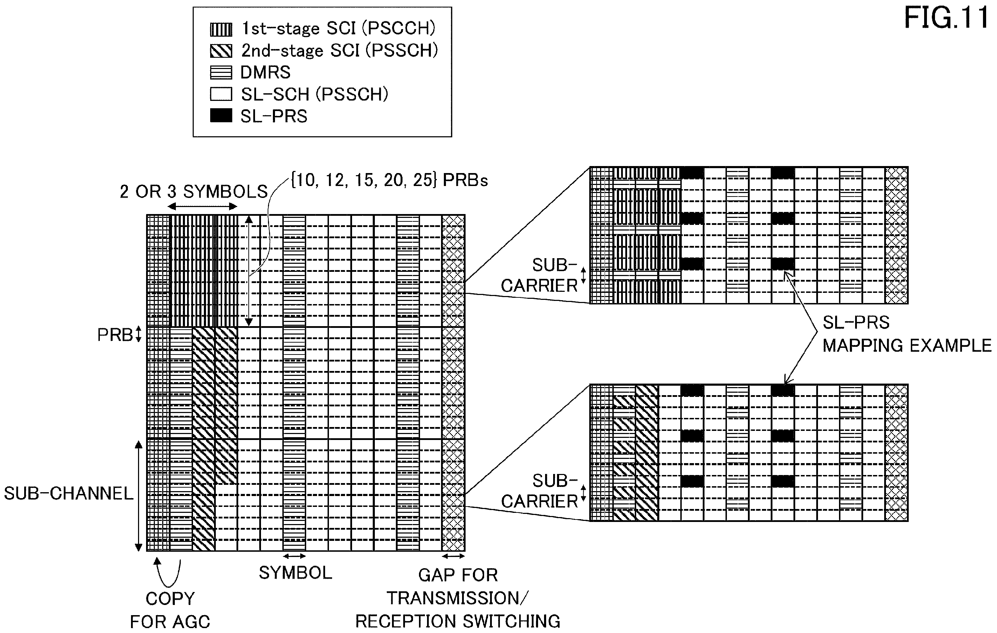

[Fig. 11] Fig. 11 is a diagram illustrating an arrangement example of a reference signal according to the embodiment of the present invention.

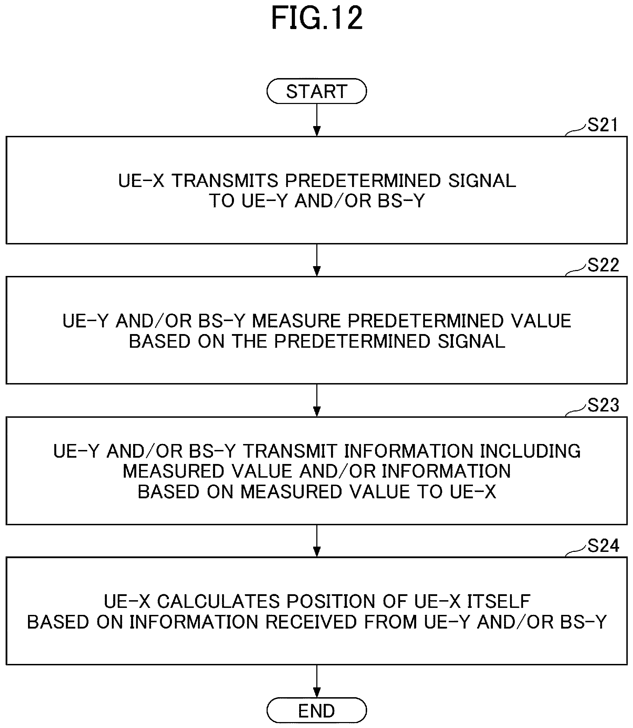

[Fig. 12] Fig. 12 is a flowchart illustrating an example (2) of position estimation according to the embodiment of the present invention.

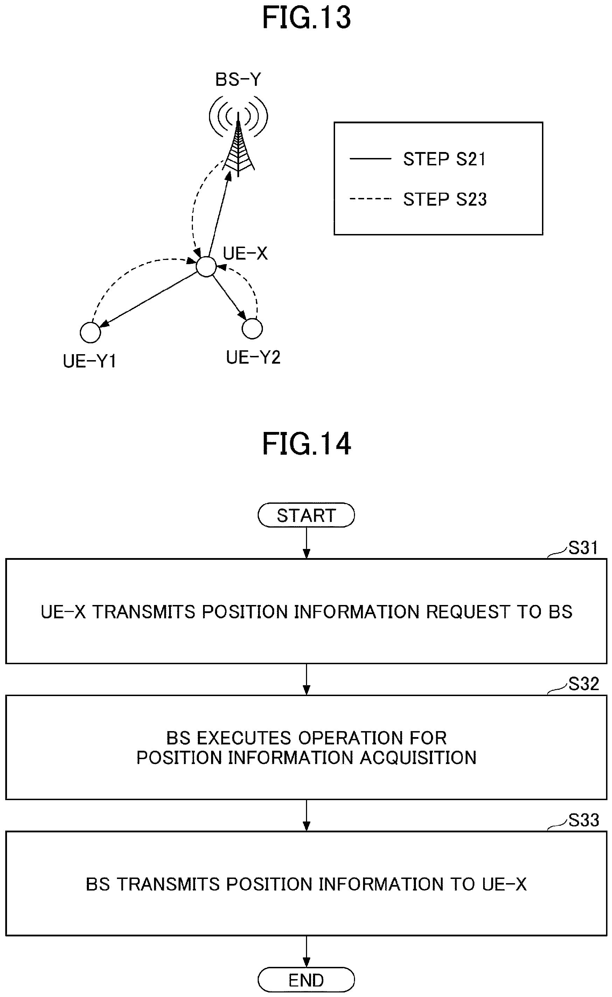

[Fig. 13] Fig. 13 is a diagram illustrating the example (2) of position estimation according to the embodiment of the present invention.

[Fig. 14] Fig. 14 is a flowchart illustrating an example (3) of position estimation according to the embodiment of the present invention.

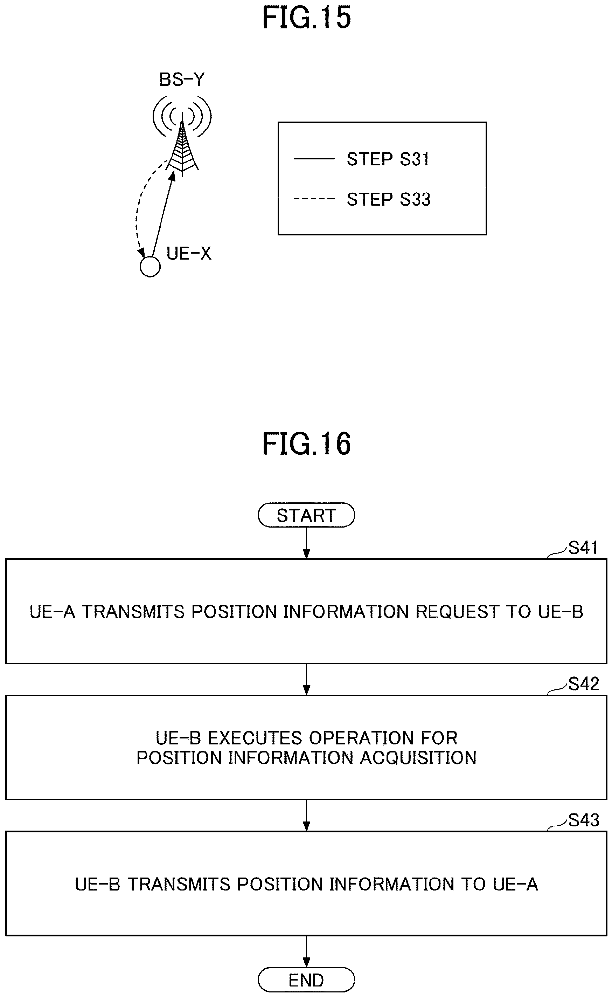

[Fig. 15] Fig. 15 is a diagram illustrating the example (3) of position estimation according to the embodiment of the present invention.

[Fig. 16] Fig. 16 is a flowchart illustrating an example (4) of position estimation according to the embodiment of the present invention.

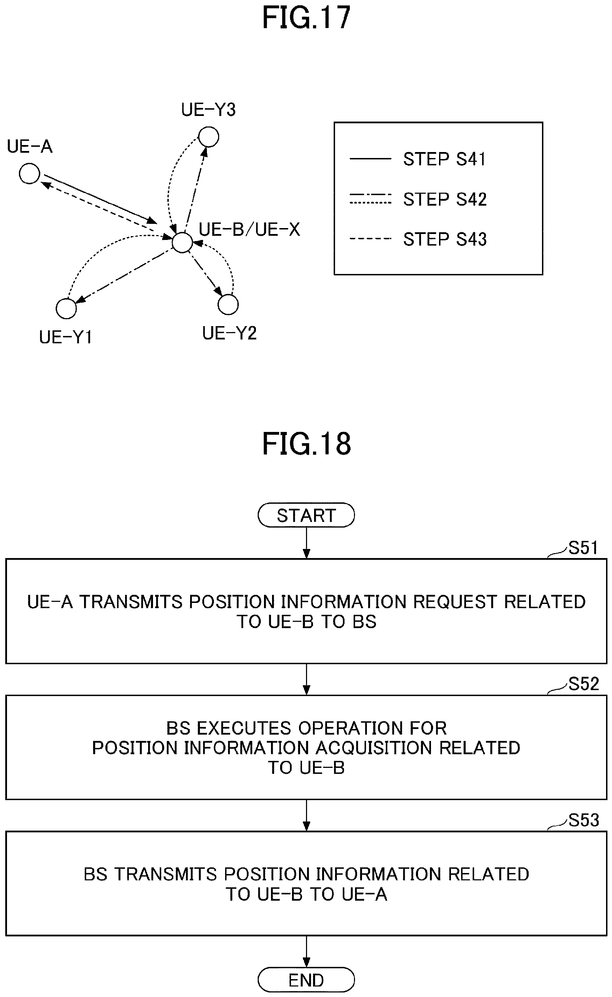

[Fig. 17] Fig. 17 is a diagram illustrating the example (4) of position estimation according to the embodiment of the present invention.

[Fig. 18] Fig. 18 is a flowchart illustrating an example (5) of position estimation according to the embodiment of the present invention.

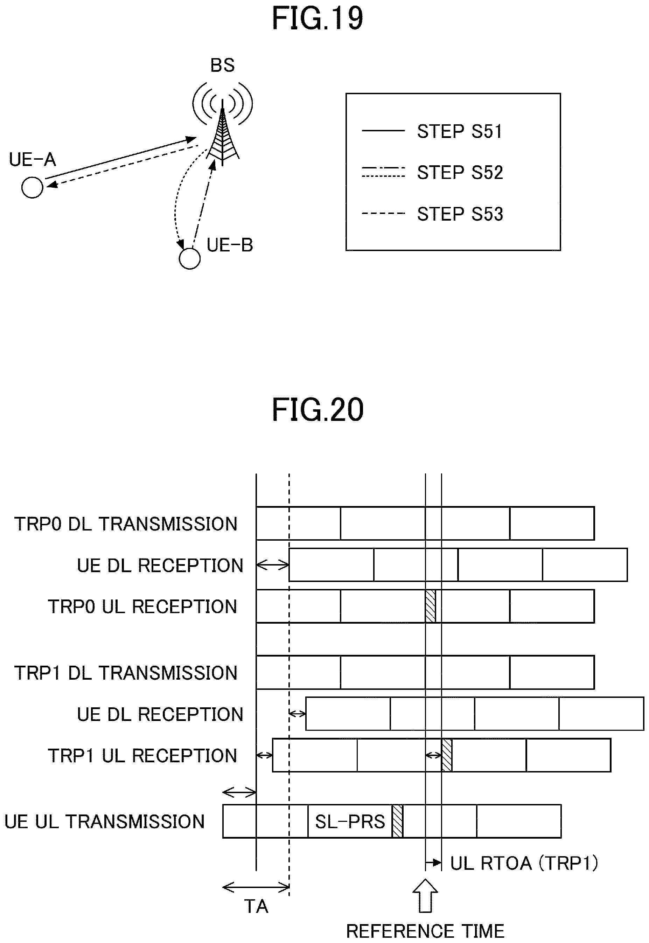

[Fig. 19] Fig. 19 is a diagram illustrating the example (5) of position estimation according to the embodiment of the present invention.

[Fig. 20] FIG. 20 is a diagram illustrating an example of transmission/reception timing.

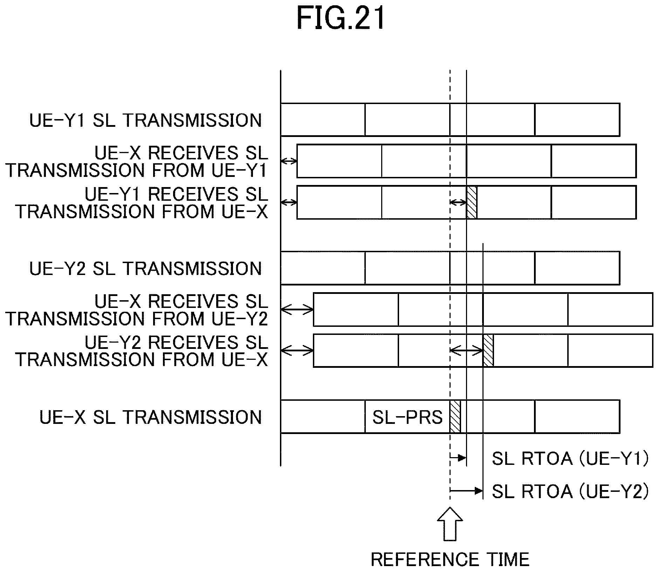

[Fig. 21] FIG. 21 is a diagram illustrating an example (1) of transmission/reception timing according to the embodiment of the present invention.

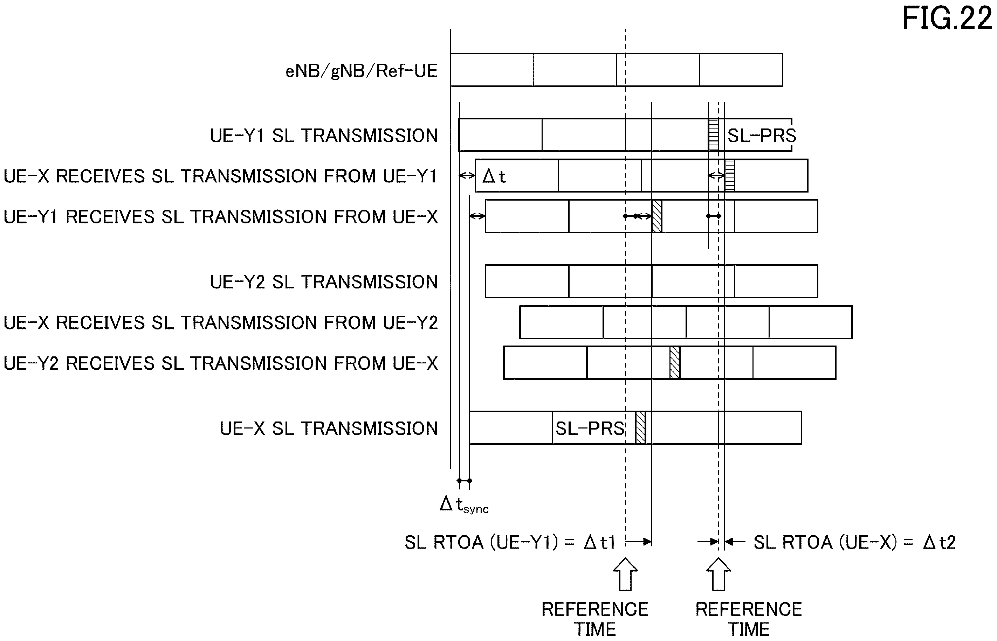

[Fig. 22] FIG. 22 is a diagram illustrating an example (2) of transmission/reception timing according to the embodiment of the present invention.

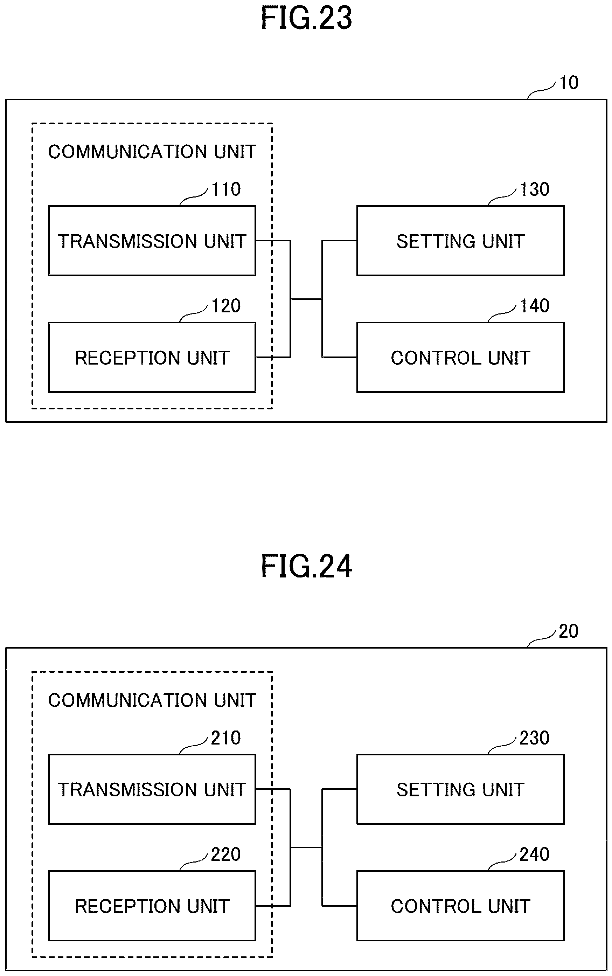

[Fig. 23] Fig. 23 is a diagram illustrating an example of a functional configuration of a base station 10 according to the embodiment of the present invention.

[Fig. 24] Fig. 24 is a diagram illustrating an example of a functional configuration of a terminal 20 according to the embodiment of the present invention.

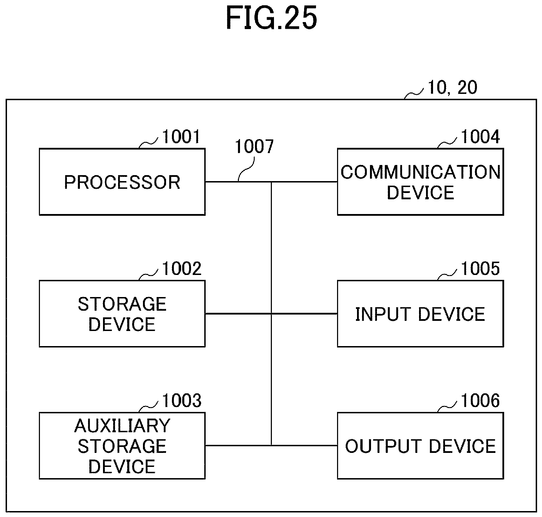

[Fig. 25] Fig. 25 is a diagram illustrating an example of a hardware configuration of the base station 10 or the terminal 20 according to the embodiment of the present invention.

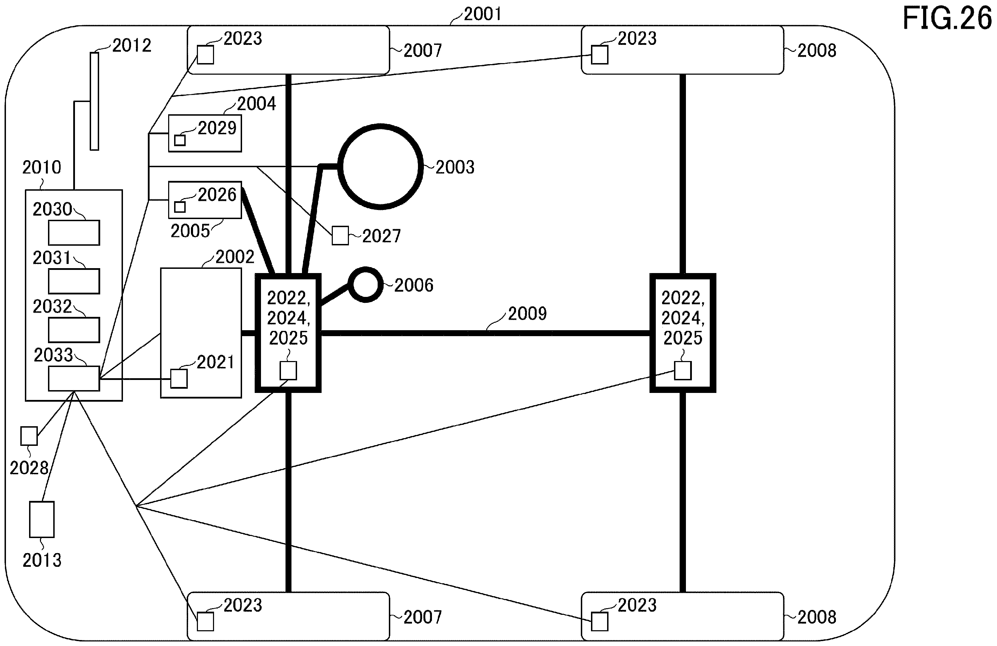

[Fig. 26] Fig. 26 is a diagram illustrating an example of a configuration of a vehicle 2001 according to the embodiment of the present invention.

Description of Embodiments

Hereinafter, an embodiment of the present invention will be described with reference to the drawings. Note that the embodiment described below is an example, and the embodiment to which the present invention is applied is not limited to the following embodiment.

In the operation of a wireless communication system of the embodiment of the present invention, an existing technology is appropriately used. The existing technology is, for example, existing LTE, but the present invention is not limited to the existing LTE. In addition, the term "LTE" used in the present specification has a broad meaning including LTE-Advanced, systems subsequent to LTE-Advanced (for example, NR), and a wireless local area network (LAN), unless otherwise specified.

In the embodiment of the present invention, a duplex system may be a time division duplex (TDD) system, a frequency division duplex (FDD) system, or other systems (for example, flexible duplex and the like).

In addition, in the embodiment of the present invention, meaning of a radio parameter or the like being "set (configured)" may indicate that a predetermined value is set in advance (pre-configured), or that a radio parameter indicated by a base station 10 or a terminal 20 is set.

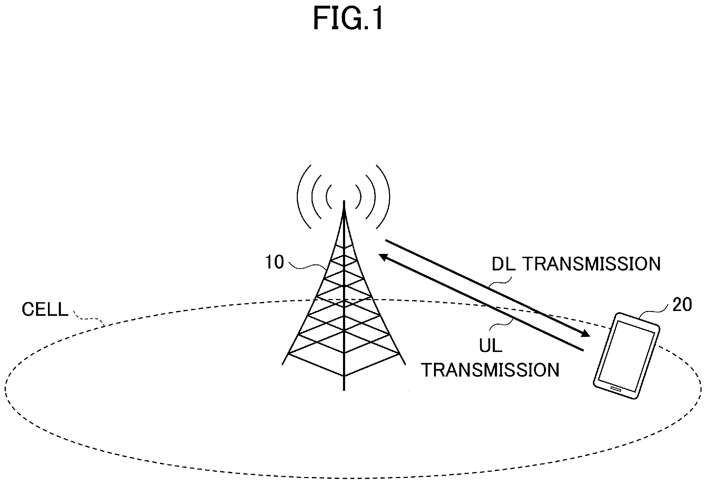

Fig. 1 is a diagram illustrating a wireless communication system according to the embodiment of the present invention. As illustrated in Fig. 1, the wireless communication system according to the embodiment of the present invention includes a base station 10 and a terminal 20. Although one base station and one terminal are illustrated in Fig. 1, the drawing is an example, and a plurality of base stations 10 and a plurality of terminals 20 may be provided.

The base station 10 is a communication device that provides one or more cells and performs wireless communication with the terminal 20. Physical resources of a radio signal are defined in a time domain and a frequency domain, the time domain may be defined by the number of orthogonal frequency division multiplexing (OFDM) symbols, and the frequency domain may be defined by the number of sub-carriers or the number of resource blocks. In addition, a transmission time interval (TTI) in the time domain may be a slot, or the TTI may be a sub-frame.

The base station 10 transmits a synchronization signal and system information to the terminal 20. The synchronization signal is, for example, an NR-PSS and an NR-SSS. The system information is transmitted through, for example, NR-PBCH and is also referred to as indication information. The synchronization signal and the system information may be referred to as an SS/PBCH block (SSB). As illustrated in Fig. 1, the base station 10 transmits a control signal or data to the terminal 20 through a downlink (DL) and receives a control signal or data from the terminal 20 through an uplink (UL). Both the base station 10 and the terminal 20 can transmit and receive a signal by performing beamforming. In addition, both the base station 10 and the terminal 20 can apply communication based on multiple input multiple output (MIMO) to the DL or the UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (primary SCG cell, PSCell) of another base station 10 by dual connectivity (DC) .

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by a wireless communication system by receiving a control signal or data from the base station 10 through the DL and transmitting a control signal or data to the base station 10 through the UL. In addition, the terminal 20 receives various reference signals transmitted from the base station 10 and measures a propagation path quality based on a reception result of the reference signals. Note that the terminal 20 may be referred to as UE, and the base station 10 may be referred to as gNB.

In addition, in LTE or NR, a carrier aggregation function using a broadband to secure data resources is supported. In the carrier aggregation function, a plurality of component carriers is bundled, thereby making it possible to secure broadband data resources. For example, a 100 MHz width may be used by bundling a plurality of 20 MHz bandwidths.

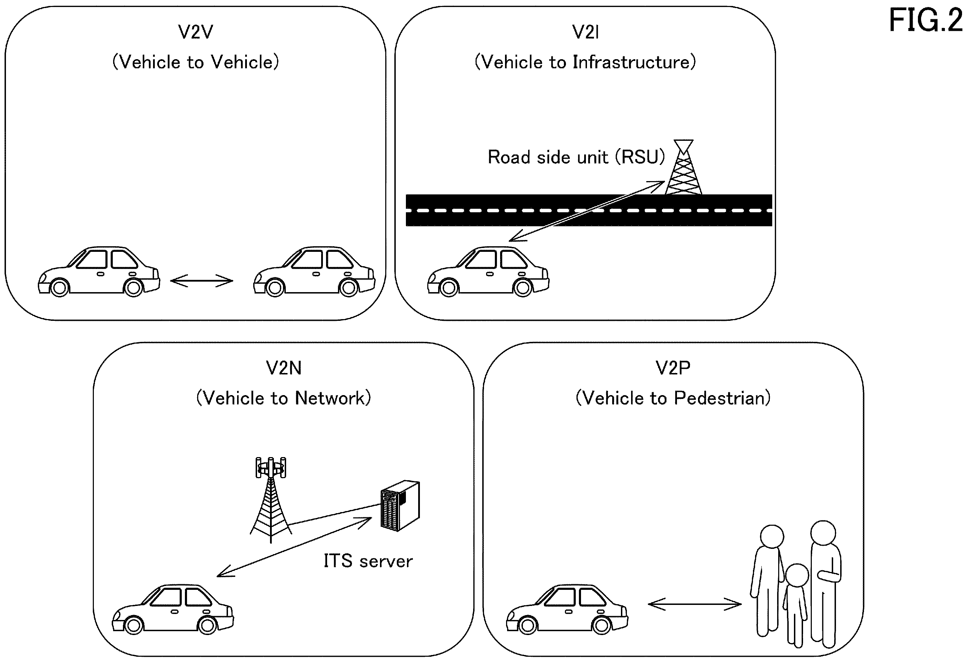

Fig. 2 is a diagram illustrating V2X. In 3GPP, realization of vehicle to everything (V2X) or enhanced V2X (eV2X) by extending a D2D function is being discussed, and technical specifications are being developed. As illustrated in Fig. 1, V2X is a part of intelligent transport systems (ITS), and is a generic name of vehicle to vehicle (V2V) meaning a communication form performed between vehicles, vehicle to infrastructure (V2I) meaning a communication form performed between a vehicle and a roadside unit (RSU) installed beside a road, vehicle to network (V2N) meaning a communication form performed between a vehicle and an ITS server, and vehicle to pedestrian (V2P) meaning a communication form performed between a vehicle and a mobile terminal possessed by a pedestrian.

In addition, in 3GPP, V2X using LTE or NR cellular communication and device-to-device communication is being discussed. V2X using cellular communication is also referred to as cellular V2X. In V2X of NR, studies to realize a large capacity, a low delay, high reliability, and quality of service (QoS) control are in progress.

Regarding V2X of LTE or NR, it is assumed that studies not limited to the 3GPP specification will be conducted in the future. For example, it is assumed that consideration will be given as to securing interoperability, reducing costs by implementation of an upper layer, a method of using a plurality of radio access technologies (RATs) in parallel or switching between the plurality of RATs, regulatory compliance in each country, and a method of acquiring, distributing, managing a database of, and using data of an LTE or NR V2X platform.

In the embodiment of the present invention, a mode in which a communication device is mounted on a vehicle is mainly assumed, but the embodiment of the present invention is not limited to such mode. For example, the communication device may be a terminal held by a person, the communication device may be a device mounted on a drone or an aircraft, or the communication device may be a base station, an RSU, a relay station (a relay node), a terminal having a scheduling capability, or the like.

Note that sidelink (SL) may be distinguished based on either or a combination of uplink (UL) or downlink (DL) and the following 1) to 4). Further, SL may have another name.

    1) Resource allocation in time domain
    2) Resource allocation in frequency domain
    3) Synchronization signal to be referred to (including sidelink synchronization signal (SLSS))
    4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM not subjected to transform precoding, and OFDM subjected to transform precoding may be applied.

In the SL of LTE, Mode 3 and Mode 4 are stipulated regarding resource allocation of the SL to the terminal 20. In Mode 3, transmission resources are dynamically allocated by downlink control information (DCI) transmitted from the base station 10 to the terminal 20. In Mode 3, semi persistent scheduling (SPS) is also possible. In Mode 4, the terminal 20 autonomously selects a transmission resource from a resource pool.

A slot in the embodiment of the present invention may be replaced with a symbol, a mini-slot, a sub-frame, a radio frame, a transmission time interval (TTI), or a time resource having a predetermined width. In addition, a cell in the embodiment of the present invention may be replaced with a cell group, a carrier component, a BWP, a resource pool, a resource, a radio access technology (RAT), a system (including a wireless LAN), or the like.

Note that, in the embodiment of the present invention, the terminal 20 is not limited to the V2X terminal, and may be any type of terminal that performs D2D communication. For example, the terminal 20 may be a terminal such as a smartphone possessed by a user, or may be an Internet of Things (IoT) device such as a smart meter.

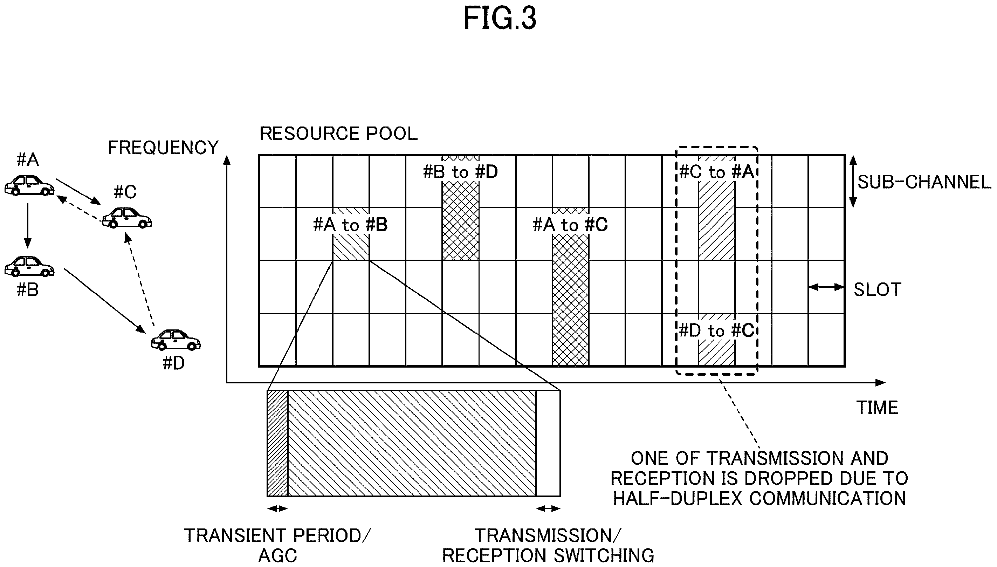

Fig. 3 is a diagram illustrating an example of communication in D2D. As illustrated in Fig. 3, an environment is assumed in which a plurality of UEs communicate with each other, such as a UE#A, a UE#B, a UE#C, and a UE#D. A resource pool used for transmission and reception by each of the UEs is a set of resources in the time domain and the frequency domain. The resource pool may be set or pre-set by a system or a service provider. For example, in the resource pool, several time resources based on a cycle may be available for cyclical traffic. Furthermore, for example, in the resource pool, some frequency resources may be unavailable to reduce interference to a Uu interface (a radio interface between a universal terrestrial radio access network (UTRAN) and a user equipment (UE)).

A sub-channel in the resource pool illustrated in Fig. 3 is a unit of scheduling in the frequency domain. For example, {10, 12, 15, 20, 25, 50, 75, 100} PRB may be set as one sub-channel or may be pre-set.

A slot in the resource pool illustrated in Fig. 3 is a unit of scheduling in the time domain. The scheduling in units of symbols may be too complex if the UE autonomously selects resources. However, the scheduling may not be performed in units of slots.

As illustrated in Fig. 3, the head of the slot to be transmitted from the UE#A to the UE#B is a transient period from the viewpoint of transmitting UE. The transient period is a period necessary for adjustment of transmission power. On the other hand, the head of the slot to be transmitted from the UE#A to the UE#B is used for auto gain control (AGC) from the viewpoint of receiving UE. The reception power significantly varies between links, and a predetermined period is required to adjust a power range. By performing scheduling in units of slots, an increase in AGC opportunities can be prevented.

As illustrated in Fig. 3, the end of the slot to be transmitted from the UE#A to the UE#B is used for a transmission/reception switching period. A certain UE may perform transmission in a slot n and then may perform reception in a slot n+1. The transmission/reception switching period is defined for each slot.

As illustrated in Fig. 3, when the transmission from the UE#C to the UE#A and the transmission from the UE#D to the UE#C overlap each other in the same slot, the UE#C cannot simultaneously execute the transmission and the reception, and thus, it is necessary to drop one of the transmission and the reception. That is, communication in D2D is half-duplex communication.

Note that default setting when coverage is out of the coverage of the base station may be pre-set (pre-configuration). Note that RRC connection/setting between UEs that perform unicast is referred to as PC5-RRC connection/setting.

Here, positioning is being discussed in scenarios of device-to-device direct communication, for example, within coverage, partial coverage, and outside coverage, or in vehicle to everything (V2X), public safety, commercial, industrial Internet of Things (IIOT), and the like. Within coverage may mean that a plurality of UEs related to positioning are within coverage of the BS, partial coverage may mean that a part of the plurality of UEs related to positioning is within coverage of the BS, and outside coverage may mean that the plurality of UEs related to positioning are not within coverage of the BS.

Positioning of the terminal 20 by location management function (LMF) in the Uu interface of 3GPP Release 16 or 17 is executed by methods of the following 1) to 3) (refer to Non Patent Literature 3, Non Patent Literature 4, and Non patent Literature 5).

1) Method based on time DL-time difference of arrival (TDOA)
2) Method based on UL-TDOA
3) Method based on multiple round trip time (RTT)

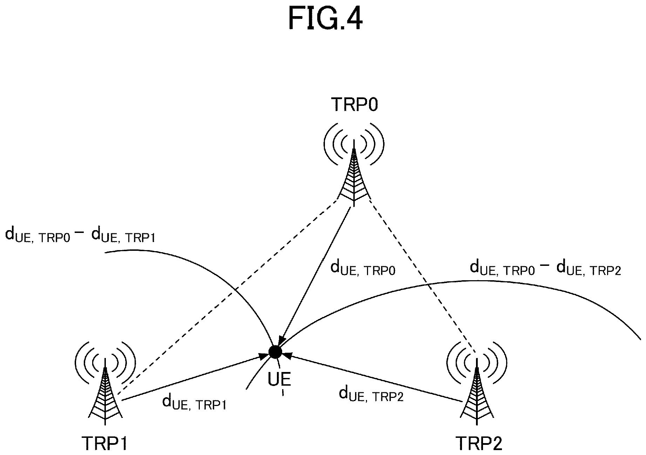

Fig. 4 is a diagram illustrating an example (1) of positioning. As illustrated in Fig. 4, position information of the UE may be calculated based on the DL-TDOA. The position of the UE may be estimated based on a DL-received signal time difference (RSTD) in which the UE measures DL radio signals transmitted from a plurality of NR TRPs. For the estimation, the geographical position of the TRP and the DL transmission timing at the TRP may be used. Furthermore, the position of the UE may be estimated based on reference signal received power (RSRP) of DL-positioning reference signal (PRS) in addition to DL-RSTD.

In the method based on DL-TDOA, the position of the UE may be calculated in the following procedure.

1) The gNB transmits DL-PRS from each TRP to the UE
2) The UE reports the DL-RSTD which is the measurement result to GW and/or gNB and/or LMF via LTE positioning protocol (LPP)
3) The gNB reports timing information related to the TRP to the LMF via NR Positioning Protocol A (NRPPa)
4) Based on the above-described information reported from the UE and the gNB, the LMF calculates the UE position

For example, as illustrated in Fig. 4, a delay between the UE and a TRP0, a delay between the UE and a TRP1, and a delay between the UE and a TRP2 may be measured, and the position of the UE may be calculated based on a geographical position and a DL transmission timing of each TRP.

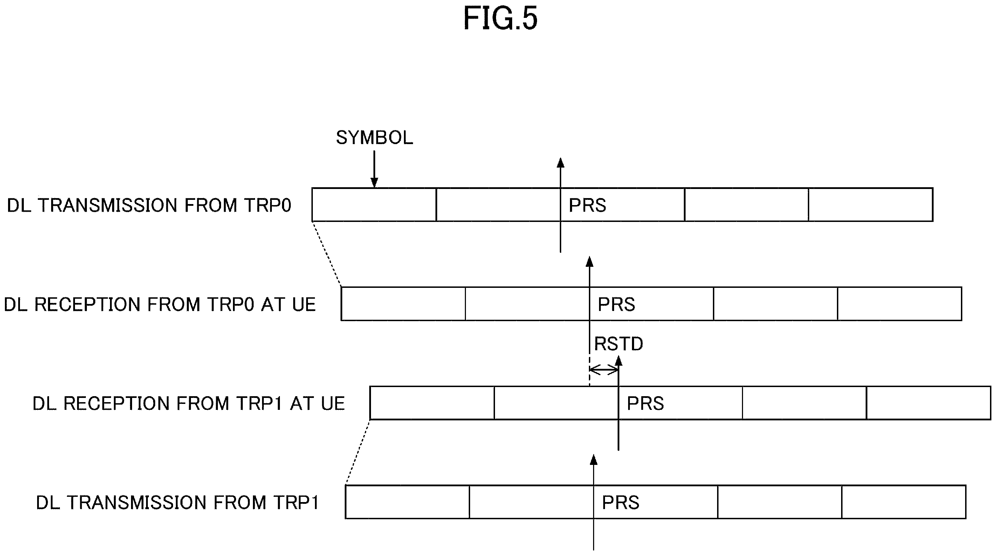

Fig. 5 is a diagram illustrating an example of measuring DL-RSTD. Hereinafter, "and/or" is also referred to as "/". As illustrated in Fig. 5, DL-RSTD may refer to a time difference measured by the UE between a reception start time point of a DL sub-frame of a reference TRP (TRP0 in Fig. 5) and a reception start time point of a DL sub-frame of another TRP. By detecting the DL-PRS, the start of the sub-frame may be determined.

A transmission timing of each TRP may not be uniform.

Regarding the calculation of the UE position by DL-TDOA, information indicated in the following 1) to 5) may be reported from the UE to GW/gNB/LMF.

1) Physical cell ID (PCI), global cell ID (GCI), and TRP-ID in each measurement
2) DL-RSTD measurement result
3) DL-PRS-RSRP measurement result
4) Time of measurement (time stamp)
5) Quality of each measurement

Regarding the calculation of the UE position by DL-TDOA, the information indicated in the following 1) to 6) may be reported from the gNB to the LMF.

1) PCI, GCI, and TRP-ID of the TRP controlled by the gNB
2) Timing information of the TRP controlled by the gNB
3) DL-PRS setting of the TRP controlled by the gNB
4) Information related to SSB of the TRP controlled by the gNB, for example, the time and frequency resources of the SSB
5) Information related to spatial direction of DL-PRS of the TRP controlled by the gNB
6) Information related to geographic coordinates of the TRP controlled by the gNB

The DL-RSTD may be defined as a time difference measured by the UE between a reception start time point of the DL sub-frame of the reference TRP and a reception start time point of the DL sub-frame of another TRP. A plurality of DL-PRS resources may be used to determine a reception start time point of a sub-frame.

As the report of timing information related to the TRP controlled by the gNB, SFN initialization time of the TRP may be reported. The SFN initialization time is a time at which SFN0 is started.

As the report of information related to the geographical coordinates of the TRP controlled by the gNB, a point on an ellipsoid having altitude and an ellipse indicating a range of error may be reported (refer to Non Patent Literature 6). For example, latitude, longitude, altitude, altitude direction, altitude error range, and the like may be reported.

As illustrated in Fig. 4, position information of the UE may be calculated based on the UL-TDOA. The position of the UE may be estimated based on UL-relative time of arrival (RTOA) in which a plurality of NR TRPs measure UL radio signals transmitted from the UE. For the estimation, other pieces of setting information may be used. Further, the position of the UE may be estimated based on RSRP of a UL-sounding reference signal (SRS) in addition to the UL-RTOA.

In the method based on UL-TDOA, the position of the UE may be calculated in the following procedure.

1) The UE transmits SRS to a plurality of TRPs
2) The gNB reports measurement results including UL-RTOA and geographic coordinates of the TRP to the LMF via the NRPPa
3) Based on the information reported by the gNB, the LMF calculates the position of the UE

For example, as illustrated in Fig. 4, an RTOA from the UE to the TRP0, an RTOA from the UE to the TRP1, and an RTOA from the UE to the TRP2 may be measured, and the position of the UE may be calculated based on the geographical position and a UL transmission timing of each TRP.

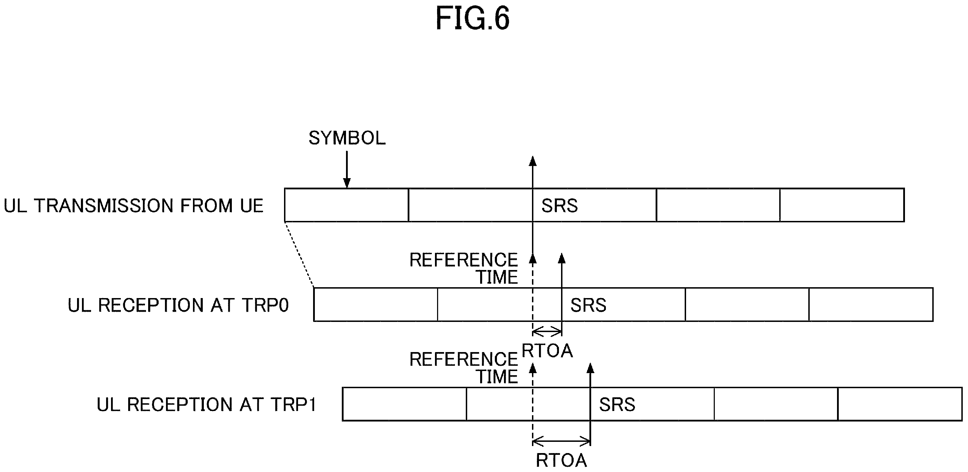

Fig. 6 is a diagram illustrating an example of measuring UL-RTOA. As illustrated in Fig. 6, the UL-RTOA may refer to a time difference between a reception start time point of a UL sub-frame including the SRS of the TRP and an RTOA reference time at which the UL is transmitted.

Regarding the calculation of the UE position by the UL-TDOA, information indicated in the following 1) to 9) may be reported from the gNB to the LMF.

1) PCI, GCI, and TRP-ID of the TRP controlled by the gNB
2) Information related to the SSB of the TRP controlled by the gNB, for example, the time and frequency resources of the SSB
3) Information related to geographic coordinates of the TRP controlled by the gNB
4) NR cell global identifier (NCGI) and TRP-ID of measurement
5) UL-RTOA
6) RSRP of UL-SRS
7) Time of measurement
8) Quality of each measurement
9) Information related to beam of each measurement

The UL-RTOA may be defined as a time difference between a reception start time point of the UL sub-frame including the SRS at the TRP and an RTOA reference time at which the UL is transmitted. The gNB may report the geographical coordinates of the TRP to the LMF via the NRPPa.

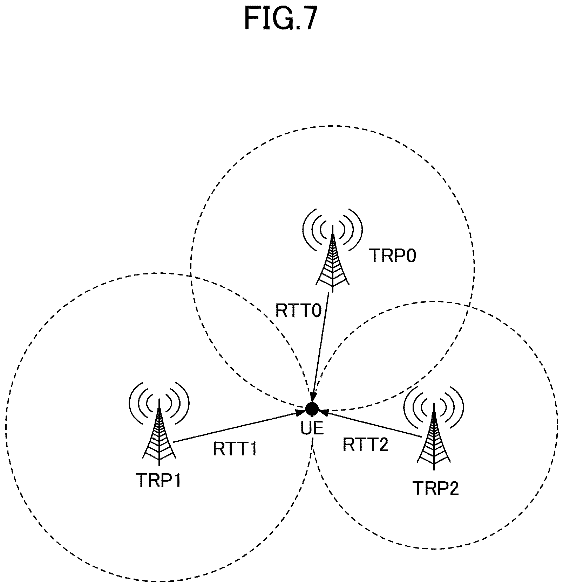

Fig. 7 is a diagram illustrating an example (2) of positioning. As illustrated in Fig. 7, the position information of the UE may be calculated based on a plurality of RTTs. The position of the UE may be estimated based on UE/gNB reception-transmission time difference measurement using DL-PRS and UL-SRS. For the estimation, DL-PRS-RSRP and UL-SRS-RSRP may be used.

The LMF may determine the RTT using the UE/gNB reception-transmission time difference measurement.

In the method based on the multi-RTT, the position of the UE may be calculated in the following procedure.

 1) The gNB transmits DL-PRS from each TRP to the UE
 2) The UE transmits SRS to a plurality of TRPs
 3) The UE reports a UE reception-transmission time difference to the GW and/or the gNB and/or the LMF via the LPP
 4) The gNB reports a gNB reception-transmission time difference to the LMF via the NRPPa
 5) Based on the information reported from the UE and the gNB, the LMF calculates the position of the UE

For example, as illustrated in Fig. 7, an RTT between the UE and the TRP0, an RTT between the UE and the TRP1, and an RTT between the UE and the TRP2 may be measured, and the position of the UE may be calculated based on the geographical position of each TRP.

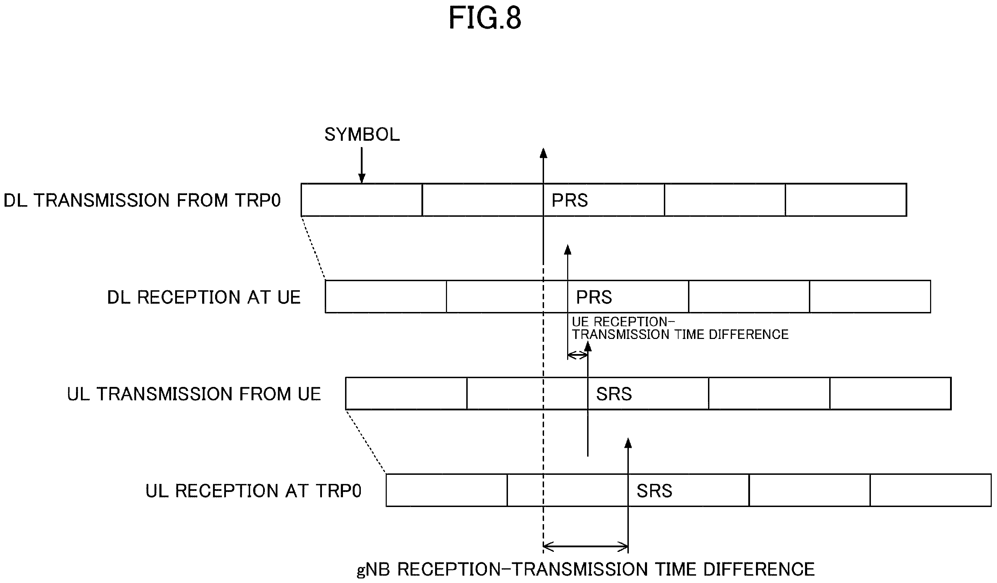

Fig. 8 is a diagram illustrating an example of measuring the RTT. As illustrated in Fig. 8, the UE reception-transmission time difference may refer to a time difference between a timing of receiving the DL sub-frame from the TRP and a timing of transmitting the UL sub-frame. In addition, as illustrated in Fig. 8, the gNB reception-transmission time difference may refer to a time difference between a timing at which the TRP receives the UL sub-frame and a timing at which the TRP transmits the DL sub-frame.

Regarding the calculation of the UE position by the plurality of RTTs, information indicated in the following 1) to 5) may be reported from the UE to the GW/gNB/LMF.

 1) PCI, GCI and TRP-ID in each measurement
 2) DL-PRS-RSRP measurement result
 3) UE reception-transmission time difference measurement result
 4) Time of measurement
 5) Quality of each measurement

Regarding the calculation of the UE position by the RTT, the information indicated in the following 1) to 9) may be reported from the gNB to the LMF.

 1) PCI, GCI, and TRP-ID of the TRP controlled by the gNB
 2) Timing information of the TRP controlled by the gNB
 3) DL-PRS setting of the TRP controlled by the gNB
 4) Information related to SSB of the TRP controlled by the gNB, for example, the time and frequency resources of the SSB
 5) Information related to spatial direction of DL-PRS of the TRP controlled by the gNB
 6) Information related to geographic coordinates of the TRP controlled by the gNB
 7) NCGI and TRP-ID of measurement
 8) gNB reception-transmission time difference
 9) RSRP of UL-SRS
 10) UL-angle of arrival (AoA), for example, azimuth and elevation
 11) Time of measurement
 12) Quality of measurement
 13) Information related to beam of measurement

Note that definitions of the UE reception-transmission time difference and the gNB reception-transmission time difference may be referred from Non Patent Literature 7. Similar to DL-RSTD, the geographical coordinates of the TRP may be reported.

As described above, in the positioning by the Uu interface, the positioning method by DL-TDOA, UL-TDOA, and multi-RTT using RSTD, RTOA, and reception-transmission time difference indicating a propagation delay between the UE and the TRP, respectively, has been applied.

Here, to perform position estimation using a sidelink signal, it is necessary to consider a position estimation algorithm for absolute position estimation or relative position estimation, a definition and a transmission/reception procedure of a measurement sidelink signal used for position estimation, a reporting procedure of a measurement result, and the like. However, a position estimation algorithm for absolute position estimation or relative position estimation using a signal of device-to-device direct communication is not clear.

Therefore, Option 1) to Option 7) described below may be executed.

Option 1) With respect to the position estimation using the sidelink, the terminal 20 which desires to acquire the position information of the terminal 20 itself (hereinafter, referred to as a "UE-X") may transmit a predetermined signal to another terminal 20 (hereinafter, referred to as a "UE-Y") and may receive a signal based on the predetermined signal (for example, a measurement result) from the UE-Y.

Fig. 9 is a flowchart illustrating an example (1) of position estimation according to the embodiment of the present invention. Fig. 10 is a diagram illustrating the example (1) of position estimation according to the embodiment of the present invention.

As illustrated in Figs. 9 and 10, in step S11, the UE-X transmits a predetermined signal to the UE-Y. In subsequent step S12, the UE-Y measures a predetermined value based on the predetermined signal. Note that step S12 may not be applied. In subsequent step S13, the UE-Y transmits a signal based on the predetermined signal (for example, information including a measured value and/or information based on the measured value may be included) to the UE-X. In subsequent step S14, the UE-X calculates the position of the UE-X itself based on the information received from the UE-Y.

For example, the UE-Y may be one or a plurality of UEs such as a UE-Y1, a UE-Y2, and a UE-Y3 illustrated in Fig. 10. That is, the UE-X may execute step S11 to step S14 for one or a plurality of UEs.

For example, the predetermined signal may be an SL positioning RS (SL-PRS) or any other SL signal. Further, the signal transmitted by the UE-Y may be the SL-PRS or any other SL signal.

Hereinafter, the signal used for the position estimation will be referred to as the SL-PRS, but is not limited thereto, and may be another name. Note that the position estimation and the positioning may be replaceable with each other.

For example, the SL-PRS may be multiplexed in PSCCH and/or PSSCH transmission and may be transmitted. Alternatively, the SL-PRS may be transmitted with a resource dedicated to the SL-PRS. Hereinafter, "PSCCH and/or PSSCH" is also referred to as "PSCCH/PSSCH".

Fig. 11 is a diagram illustrating an arrangement example of a reference signal according to the embodiment of the present invention. The SL-PRS may be arranged as illustrated in the following 1) to 3).

1) The SL-PRS may not be multiplexed in an RE in which a second stage SCI and/or DM-RS and/or PT-RS and/or CSI-RS are arranged. For example, an overlap between the SL-PRS and the second stage SCI, the DM-RS, the PT-RS, and the CSI-RS may not be assumed. For example, when a mapping destination of the SL-PRS is the RE in which the second stage SCI, the DM-RS, the PT-RS, or the CSI-RS are arranged, mapping of the SL-PRS to the RE may not be executed.

2) The SL-PRS may not be multiplexed in the RE of the PSCCH. For example, an overlap between the PSCCH and the SL-PRS may not be assumed. For example, when the mapping destination of the SL-PRS is the RE in which the PSCCH is disposed, PSCCH may be prioritized and mapping of the SL-PRS to the RE may not be executed.

3) The SL-PRS may be, or may not be multiplexed with the second stage SCI and/or the DM-RS and/or the PT-RS and/or the CSI-RS, onto the same symbol by using the frequency division multiplexing.

According to the above 1) or 2), an important signal can be prevented from being replaced with the SL-PRS. In addition, according to the above 3), flexibility of mapping when the frequency division multiplexing is applied to the SL-PRS is improved, and UE operation can be simplified when the frequency division multiplexing is not applied to the SL-PRS. Even though Fig. 11 is an example of mapping of the SL-PRS, the present invention is not limited thereto.

For example, in step S14, the position of the UE-X itself calculated by the UE-X may be an absolute position or may be a relative position.

For example, Option 1) may be applied when the UE-X and the UE-Y are in an out-of-coverage (OoC) environment, may be applied when the UE-X and the UE-Y are in a partial-coverage (PC) environment, or may be applied when the UE-X and the UE-Y are in an in-coverage (IC) environment.

With the above-described Option 1), the terminal 20 can execute an operation for position information acquisition.

Option 2) With respect to the position estimation using the sidelink, the UE-X which desires to acquire the position information of the UE-X itself may transmit a predetermined signal to the UE-Y and/or the base station 10 (hereinafter, referred to as "BS-Y") and may receive a signal based on the predetermined signal (for example, a measurement result) from the UE-Y and/or the BS-Y.

Fig. 12 is a flowchart illustrating an example (2) of position estimation according to the embodiment of the present invention. Fig. 13 is a diagram illustrating the example (2) of position estimation according to the embodiment of the present invention.

As illustrated in Figs. 12 and 13, in step S21, the UE-X transmits a predetermined signal to the UE-Y and/or the BS-Y. In subsequent step S22, the UE-Y and/or the BS-Y measure a predetermined value based on the predetermined signal. Note that step S22 may not be applied. In subsequent step S23, the UE-Y and/or the BS-Y transmit a signal based on the predetermined signal (for example, information including a measured value and/or information based on the measured value may be included) to the UE-X. In subsequent step S24, the UE-X calculates the position of the UE-X itself based on the information received from the UE-Y and/or the BS-Y.

For example, as in a UE-Y1 and a UE-Y2 illustrated in Fig. 13, the UE-Y may be one or a plurality of UEs. That is, the UE-X may execute step S11 to step S14 for one or a plurality of UEs. Further, the BS-Y may be one or a plurality of BSs.

For example, the predetermined signal for the UE-Y may be the SL-PRS or any other SL signal. For example, the predetermined signal for the BS-Y may be the SRS or any other UL signal. Further, the signal transmitted by the UE-Y may be the SL-PRS or any other SL signal. Further, the signal transmitted by the BS-Y may be the DL-PRS or any other DL signal.

For example, in step S24, the position of the UE-X itself calculated by the UE-X may be an absolute position or may be a relative position.

For example, Option 2) may be applied in the case of the partial-coverage environment or the in-coverage environment. However, the case of the partial-coverage environment may be a case in which the UE-X is in the in-coverage environment and the UE-Y is in the out-of-coverage environment.

According to the above-described Option 2), the terminal 20 can be expected to acquire more accurate position information by using the base station 10.

Option 3) The UE-X that acquired the position of the UE-X itself may transmit a request for position information transmission to the BS. For example, only the terminal 20 supporting a positioning function by the Uu interface may execute Option 3).

Fig. 14 is a flowchart illustrating an example (3) of position estimation according to the embodiment of the present invention. Fig. 15 is a diagram illustrating the example (3) of position estimation according to the embodiment of the present invention. As illustrated in Figs. 14 and 15, in step S31, the UE-X transmits a position information request to the BS. In subsequent step S32, the BS executes a position information acquisition operation. In subsequent step S33, the BS transmits position information to the UE-X.

For example, in step S32, the positioning function using the Uu interface described above may be applied.

For example, step S32 may be skipped without being executed. For example, when the BS has already had the position information of the UE-X, step S32 may not be executed. Further, for example, when the BS has already had the position information of the UE-X and the desired accuracy requirement is satisfied, step S32 may not be executed. For example, step S33 may be skipped without being executed. For example, when the DL-PRS is transmitted from a plurality of BS/TRPs to the UE-X and positioning is executed in the UE-X in step S32, step S33 may not be executed.

For example, the position information requested by the UE-X may be an absolute position or may be a relative position.

For example, the UE-X may receive an indication indicating that the position information cannot be acquired from the BS instead of receiving the position information. After receiving the indication, the UE-X may execute another method, for example, Option 1) or Option 2) to acquire the position information.

With the above-described Option 3), the terminal 20 can execute an operation for position information acquisition. By using Uu positioning, more accurate positioning can be expected.

Option 4) Which one of Option 1), Option 2), and Option 3) is to be executed may be determined based on a predetermined condition.

For example, the predetermined condition may be any one of the out-of-coverage environment, the partial-coverage environment, and the in-coverage environment.

For example, the predetermined condition may be an accuracy requirement. That is, an option to be applied may be determined based on whether the accuracy requirement is higher or lower than a predetermined threshold value.

For example, the predetermined condition may be whether of an absolute position or a relative position is to be acquired.

For example, the predetermined condition may be a predetermined priority set for each option. For example, Option 3) may be the highest priority, Option 2) may have the next highest priority, and Option 3) may have the lowest priority. The operation of executing the option with the next highest priority when the option with the highest priority cannot be executed may be performed and repeated.

For example, the predetermined condition may be a UE capability. That is, which one of an options is to be supported may be specified as the UE capability, and the terminal 20 may execute the option to be supported.

For example, the predetermined condition may be UE implementation. That is, the terminal 20 may determine an option to be executed based on the UE implementation.

With the above-described Option 4), the terminal 20 can determine which method is to be executed when a plurality of position acquisition methods are available.

Option 5) The terminal 20 (hereinafter, referred to as a "UE-A") which desires to acquire position information of another terminal 20 (hereinafter, referred to as a "UE-B") may transmit a request for position information transmission to the UE-B.

Fig. 16 is a flowchart illustrating an example (4) of position estimation according to the embodiment of the present invention. Fig. 17 is a diagram illustrating the example (4) of position estimation according to the embodiment of the present invention. As illustrated in Figs. 16 and 17, in step S41, the UE-A transmits a position information request to the UE-B. In subsequent step S42, the UE-B executes a position information acquisition operation. In subsequent step S43, the UE-B transmits position information of the UE-B to the UE-A.

For example, in step S42, Option 1), Option 2), or Option 3) may be executed. The UE-B may be a UE-X in Option 1), Option 2), or Option 3). The UE-A may or may not be included in the UE-Ys in Option 1), Option 2), or Option 3). When the UE-A is included in the UE-Ys in Option 1), Option 2), or Option 3), any step in Option 1), Option 2), or Option 3) for the UE-A may be skipped without being executed.

For example, step S42 may be skipped without being executed. For example, when the UE-B has already had the position information of the UE-B itself, step S42 may not be executed. Furthermore, for example, when the UE-B has already had the position information of the UE-B itself and the desired accuracy requirement is satisfied, step S42 may not be executed.

For example, the position information requested by the UE-A may be an absolute position or a relative position.

With Option 5), it is possible to support a use case and a service which requires the position information of another UE. In addition, the operation of acquiring the position information of another UE and the operation of acquiring the position information of the UE itself can be the same.

Option 6) The terminal 20 (hereinafter, referred to as the "UE-A") which desires to acquire the position information of another terminal 20 (hereinafter, referred to as the "UE-B") may transmit a request for position information transmission related to the UE-B to the BS.

Fig. 18 is a flowchart illustrating an example (5) of position estimation according to the embodiment of the present invention. Fig. 19 is a diagram illustrating the example (5) of position estimation according to the embodiment of the present invention. As illustrated in Figs. 18 and 19, in step S51, the UE-A transmits a position information request related to the UE-B to the BS. In subsequent step S52, the BS executes a position information acquisition operation related to the UE-B. In subsequent step S53, the BS transmits position information related to the UE-B to the UE-A.

For example, in step S52, the positioning function of the Uu interface, for example, the positioning function of the Uu interface described above may be executed.

For example, in step S52, the BS may indicate the UE-B to execute a positioning function of the SL, for example, Option 1) or Option 2). The UE-B may execute the positioning function of the SL, for example, Option 1) or Option 2), and may report the acquired position information of the UE-B itself to the BS.

For example, step S52 may be skipped without being executed. For example, when the BS has already had the position information of the UE-B, step S52 may not be executed. Furthermore, for example, when the BS a has already had the position information of the UE-B and the desired accuracy requirement is satisfied, step S52 may not be executed.

For example, the position information requested by the UE-A may be an absolute position or a relative position.

For example, the UE-A may receive an indication indicating that the position information related to the UE-B cannot be acquired from the BS instead of receiving the position information. After receiving the indication, the UE-A may execute another method, for example, Option 5) to acquire the position information.

With the above-described Option 6), the terminal 20 can execute an operation for position information acquisition. By using Uu positioning, more accurate positioning can be expected.

Option 7) Which one of Option 5) and Option 6) is to be executed may be determined based on a predetermined condition.

For example, the predetermined condition may be any one of the out-of-coverage environment, the partial-coverage environment, and the in-coverage environment.

For example, the predetermined condition may be an accuracy requirement.

For example, the predetermined condition may be which one of an absolute position or a relative position is to be acquired.

For example, the predetermined condition may be a predetermined priority set for each option. For example, Option 6) may have a higher priority than Option 5).

For example, the predetermined condition may be a UE capability. That is, which one of options is to be supported may be specified as the UE capability, and the terminal 20 may execute the option to be supported.

For example, the predetermined condition may be UE implementation. That is, the terminal 20 may determine an option to be executed based on the UE implementation.

With the above-described Option 7), the terminal 20 can determine which method is to be executed when a plurality of position acquisition methods are available.

Here, in the case of positioning in Uu, the DL and UL timings are aligned on the network side by TA (Timing Advance), and the TRP timings are aligned, or the network side knows the timing difference, so that the delay time and time difference between TRP and UE can be correctly acquired.

Hereinafter, the transmission timing of the SL-PRS or the reception timing of the SL-PRS may correspond to the start time point in the time domain of the SL-PRS, may correspond to any time point in a predetermined signal, or may correspond to a predetermined time point (for example, the start time point in the time domain) in a time resource unit (for example, a slot, a subframe, or a frame) in which the SL-PRS is included.

FIG. 20 is a diagram illustrating an example of transmission/reception timing. Although FIG. 20 illustrates an example in which the DL timing of TRP0 and TRP1 are aligned, the present invention may be applied to a case where they are not aligned. As illustrated in FIG. 20, when the UE transmits the SL-PRS, and TRP0 and TRP1 receive the SL-PRS, respectively, the reference time is defined by the timing related to the DL in TRP0 or the UL reception timing of the SL-PRS, and the UL-RTOA in TRP0 is 0. As illustrated in FIG. 20, the UL-RTOA in TRP1 is the time from the reference time to the UL reception timing of the SL-PRS in TRP1. Note that the reference time may not be defined, and the RTOA may be defined as a reception timing difference between TRPs. The same applies hereinafter.

From the UL-TDOA at TRP0 (i.e., 0) and the UL-TDOA at TRP1, and the absolute position of TRP0 and the absolute position of TRP1, a curve can be plotted that is a candidate for the UE position.

On the other hand, in the case of the positioning in the SLs, the synchronization source is a global navigation satellite system (GNSS), an eNB, a gNB, a SyncRefUE, or the like. When performing positioning in the SL, a reference time and a time difference to be obtained need to be defined appropriately according to each synchronization source.

Therefore, a measurement value based on transmission/reception of an SL signal performed between the UE-X that desires to acquire the position of the UE-X itself and a partner (UE-Y) that transmits an SL signal for positioning may be measured using a predetermined timing as a reference time.

When the UE-X and the UE-Y are synchronized based on the GNSS, the timing based on the GNSS may be used as the reference time. The GNSS based SL synchronization timing may be defined by, for example, a frame, a subframe, a slot, or UTC time.

FIG. 21 is a diagram illustrating an example (1) of transmission/reception timing in the embodiment of the present invention. In the example illustrated in FIG. 21, when synchronization is performed based on the GNSS, it may be assumed that transmission timings are aligned in all UEs.

As illustrated in FIG. 21, the reference time may be defined as a GNSS-based timing, i.e., the SL-PRS transmission timing or synchronization timing of UE-X or UE-Y. The SL-RTOA in the UE-Y1 is from the reference time to the timing at which the UE-Y1 receives the SL-PRS. The SL-RTOA in the UE-Y2 is from the reference time to the timing at which the UE-Y2 receives the SL-PRS.

When the UE-Y receives a measurement signal (for example, an SL-PRS) from the UE-X, the UE-Y may measure a difference between a timing related to the reception of the SL-PRS and the reference time, and may report the difference to the UE-X.

On the other hand, when the UE-X receives the SL-PRS from UE-Y, the UE-X may measure the difference between the timing of receiving the SL-PRS and the reference time.

By the above-described operation, the propagation delay of the SL signal can be properly measured.

In addition, in a case where the UE-X and the UE-Y are synchronized based on the eNB, the gNB, or the SyncRefUE (UE serving as a synchronization source), a timing based on a synchronization timing of the UE-X itself may be set as the reference time. For example, the synchronization timing of the UE-X itself may be the SL synchronization timing based on the DL timing of the eNB or the gNB, or may be the SL synchronization timing based on the S-SSB reception.

FIG. 22 is a diagram illustrating an example (2) of the transmission/reception timing in the embodiment of the present invention. $\Delta t$ is a difference between the transmission timing of the UE-Y and the timing at which the UE-X receives the transmission of UE-Y, that is, a difference between the transmission timing of the UE-X and the timing at which UE-Y receives the transmission of UE-X, that is, a propagation delay between UE-X and UE-Y. As illustrated in FIG. 22, when the UE-Y receives a measurement signal (for example, an SL-PRS) from the UE-X, the UE-Y may measure a difference between a timing related to the reception of the SL-PRS and a reference time or a value including the difference, and may report the difference to the UE-X. The reported value may be $\Delta t1$, which is represented below.

$$\Delta t1 \ = \ t_{Y\text{-}RX} - t_{Y\text{-}Ref}$$

where, as illustrated in FIG. 22,
$t_{Y\text{-}RX}$ is the SL-PRS reception timing at UE-Y
$t_{Y\text{-}Ref}$ is a reference time in UE-Y
$\Delta t_{sync}$ is the synchronization shift between UE-Y and UE-X As illustrated in FIG. 22,

$$\Delta t1 \ = \ \Delta t \ + \ \Delta t_{sync}$$

On the other hand, as illustrated in FIG. 22, when the UE-X receives a measurement signal (for example, an SL-PRS) from the UE-Y, the UE-X measures a difference between a timing related to the reception of the SL-PRS and a reference time or a value including the difference. The reported value may be $\Delta t2$, which is represented below.

$$\Delta t2 \ = \ t_{X\text{-}RX} - t_{X\text{-}Ref}$$

where, as illustrated in FIG. 22,
$t_{X\text{-}RX}$ is the SL-PRS reception timing at UE-X, and
$t_{X\text{-}Ref}$ is a reference time in UE-X.

As illustrated in FIG. 22,

$$\Delta t2 \ = \ \Delta t \ - \ \Delta t_{sync}$$

The UE-X may measure the position of the UE based on the information $\Delta t1$ and $\Delta t2$. Note that the propagation delay $\Delta t$ between UE-Y and UE-X is as follows.

$$\Delta t \ = \ (\Delta t1 \ + \ \Delta t2)/2$$

Since the transmission timing shift $\Delta t_{sync}$ between UE-Y and UE-X is included in the information $\Delta t1$ and $\Delta t2$ with different codes, $\Delta t$ can be calculated by the above equation.

In addition, in a case where UE-X and UE-Y are synchronized based on eNB, gNB, or SyncRefUE, a method in which both UE-X and UE-Y transmit SL-PRS to each other and measure a time difference is applied, and a method in which only one of UE-X and UE-Y transmits SL-PRS and measures a time difference may not be applied. Thus, even when there is a synchronization shift between UEs, the propagation delay can be properly measured.

Note that, in a case where the UE-X and the UE-Y are synchronized based on the GNSS, the same method as the above-described case where the UE-X and the UE-Y are synchronized based on the eNB, the gNB, or the SyncRefUE (UE serving as a synchronization source) may be applied. For example, a timing based on the synchronization timing of the UE itself may be used as the reference time, a method in which both UE-X and UE-Y transmit SL-PRS to each other and measure the time difference may be applied, and a method in which only one of the UE-X and the UE-Y transmits SL-PRS and measures the time difference may not be applied.

Also, when UE-X and UE-Y are synchronized based on the eNB or gNB, a timing based on the DL transmission timing in the eNB or gNB may be used as the reference time. The timing serving as the reference time may be derived from the TA value used for communication with the eNB or the gNB. For example, the timing that is earlier than the DL reception timing of the UE itself by TA/2 may be set as the timing that is the reference time. Thus, even when there is a synchronization shift between UEs, the propagation delay can be measured using the common timing as the reference time.

It should be noted that, in the above-described embodiment, the reference time is defined by a specific frame or a specific subframe, and a frame length and/or an index, a subframe length or an index may be used for measurement and/or calculation.

Note that the reception timing of the SL-PRS may be defined as a specific timing of a frame or a subframe, and a difference between the actual reception timing and the reception timing defined by the definition may be used for measurement and/or calculation.

The above-described embodiment may be applied to D2D of NR or may be applied to D2D of another RAT. In addition, the above-described embodiment may be applied to FR2 or may be applied to other frequency bands.

The above-described embodiment is not limited to V2X terminals, and may be applied to terminals that perform D2D communication.

The operation according to the above-described embodiment may be executed only in a specific resource pool. For example, the operation may be executed only in a resource pool available to the terminal 20 of 3GPP release 17 or 3GPP release 18 or later.

According to the above-described embodiment, the terminal 20 transmits and receives the signal for positioning by using the sidelink signal, and performs measurement by applying the reference time based on the synchronization source, and thus can acquire the position information of the terminal 20 itself.

That is, the position information of the terminal 20 itself can be acquired by the device-to-device direct communication.

(Device Configuration)

Next, functional configuration examples of the base station 10 and the terminal 20 that execute the processing and operation described above will be described. The base station 10 and the terminal 20 include a function of implementing the above-described embodiment. However, each of the base station 10 and the terminal 20 may have only a part of functions in the embodiment.

<Base Station 10>

Fig. 23 is a diagram illustrating an example of a functional configuration of the base station 10. As illustrated in Fig. 23, the base station 10 includes a transmission unit 110, a reception unit 120, a setting unit 130, and a control unit 140. The functional configuration illustrated in Fig. 23 is merely an example. As long as the operation according to the embodiment of the present invention can be executed, the functional classification and the name of the functional units may be freely selected.

The transmission unit 110 has a function of generating a signal to be transmitted to the terminal 20 side and wirelessly transmitting the signal. The reception unit 120 has a function of receiving various signals transmitted from the terminal 20 and acquiring, for example, information of an upper layer from the received signals. In addition, the transmission unit 110 has a function of transmitting NR-PSS, NR-SSS, NR-PBCH, a DL/UL control signal, a DL reference signal, and the like to the terminal 20.

The setting unit 130 stores setting information set in advance and various types of setting information to be transmitted to the terminal 20 in a storage device, and reads the setting information from the storage device as necessary. A content of the setting information is, for example, information related to setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmission unit 110. Furthermore, the control unit 140 receives information regarding HARQ responses of the D2D communication and the DL communication from the terminal 20 via the reception unit 120. The functional unit related to signal transmission in the control unit 140 may be included in the transmission unit 110, and the functional unit related to signal reception in the control unit 140 may be included in the reception unit 120.

<Terminal 20>

Fig. 24 is a diagram illustrating an example of a functional configuration of the terminal 20. As illustrated in Fig. 24, the terminal 20 includes a transmission unit 210, a reception unit 220, a setting unit 230, and a control unit 240. The functional configuration illustrated in Fig. 24 is merely an example. As long as the operation according to the embodiment of the present invention can be executed, the functional classification and the name of the functional units may be freely selected.

The above-described LTE-SL transmission/reception mechanism (module) and the above-described NR-SL transmission/reception mechanism (module) may separately include the transmission unit 210, the reception unit 220, the setting unit 230, and the control unit 240.

The transmission unit 210 generates a transmission signal from transmission data and wirelessly transmits the transmission signal. The reception unit 220 wirelessly receives various signals and acquires a signal of an upper layer from the received signals of a physical layer. Furthermore, the reception unit 220 has a function of receiving NR-PSS, NR-SSS, NR-PBCH, a DL/UL/SL control signal, a reference signal, and the like transmitted from the base station 10. Furthermore, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as the D2D communication, and the reception unit 220 receives PSCCH, PSSCH, PSDCH, PSBCH, or the like from the other terminal 20.

The setting unit 230 stores various types of setting information received from the base station 10 or the terminal 20 by the reception unit 220 in a storage device, and reads the setting information from the storage device as necessary. The setting unit 230 also stores setting information set in advance. A content of the setting information is, for example, information related to setting of the D2D communication.

As described in the embodiment, the control unit 240 controls the D2D communication for establishing an RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information regarding HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from a resource selection window based on a result of sensing, or may execute reevaluation or pre-emption. Furthermore, the control unit 240 performs processing related to power saving in transmission/reception of the D2D communication. Furthermore, the control unit 240 performs processing related to device-to-device cooperation in the D2D communication. The functional unit related to signal transmission in the control unit 240 may be included in the transmission unit 210, and the functional unit related to signal reception in the control unit 240 may be included in the reception unit 220.

(Hardware Configuration)

The block diagrams used for the description of the above-described embodiment (Figs. 23 and 24) illustrate blocks of functional units. The functional blocks (configuration units) are realized by any combination of at least one of hardware and software. A method of implementing each functional block is not particularly limited. That is, each functional block may be implemented by using one physically or logically combined device, or may be implemented by directly or indirectly (for example, by using wired, wireless, or the like) connecting two or more physically or logically separated devices to each other and using the plurality of devices. The functional block may be implemented by combining software with the one device or the plurality of devices.

The functions include, but are not limited to, deciding, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating and mapping, assigning, and the like. For example, a functional block (configuration unit) that causes transmission to function is referred to as a transmission unit (transmitting unit) or a transmitter. In any case, as described above, the implementation method is not particularly limited.

For example, the base station 10, the terminal 20, and the like in the embodiment of the present disclosure may function as a computer that performs processing of a wireless communication method of the present disclosure. Fig. 25 is a diagram illustrating an example of hardware configurations of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configurations of the base station 10 and the terminal 20 may be configured to include one or more devices illustrated in the drawing, or may be configured without including a part of devices.

Each function in the base station 10 and the terminal 20 is implemented by the processor 1001 performing calculation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (a program code), a software module, data, or the like from at least one of the auxiliary storage device 1003 and the communication device 1004 to the storage device 1002, and executes various types of processing according to the program, the software module, the data, or the like. As the program, a program that causes a computer to execute at least part of the operations described in the above-described embodiments is used. For example, the control unit 140 of the base station 10 illustrated in Fig. 23 may be implemented by a control program stored in the storage device 1002 and operated by the processor 1001. Furthermore, for example, the control unit 240 of the terminal 20 illustrated in Fig. 24 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmission/reception device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like to implement, for example, at least one of frequency division duplex (FDD) and time division duplex (TDD). For example, a transmission/reception antenna, an amplifier unit, a transmission/reception unit, a transmission/reception path interface, and the like may be implemented by the communication device 1004. The transmission/reception unit may be implemented such that the transmission unit and the reception unit are physically or logically separated from each other.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs an output to the outside. Note that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the pieces of hardware.

Fig. 26 illustrates a configuration example of a vehicle 2001. As illustrated in Fig. 26, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 is configured with various devices for providing various types of information such as driving information, traffic information, and entertainment information, such as a car navigation system, an audio system, a speaker, a television, and a radio, and one or more ECUs that control the devices. The information service unit 2012 provides various types of multi-media information and multi-media services to an occupant of the vehicle 2001 using information acquired from an external device via the communication module 2013 or the like. The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that performs an output to the outside.

A driving assistance system unit 2030 is configured with various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs that control the devices. The driving assistance system unit 2030 also transmits and receives various types of information via the communication module 2013 to implement a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device capable of being controlled by the microprocessor 2031 of the electronic control unit 2010 and capable of communicating with an external device. For example, various types of information are transmitted and received to and from the external device via wireless communication. The communication module 2013 may be provided on the inside or the outside of the electronic control unit 2010. The external device may be, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via wireless communication. The electronic control unit 2010, the various sensors 2021 to 2028, the information service unit 2012, and the like may be referred to as an input unit that receives an input. For example, the PUSCH transmitted by the communication module 2013 may include information based on the input.

The communication module 2013 receives various types of information (traffic information, signal information, inter-vehicle information, and the like) transmitted from an external device, and displays the information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). The communication module 2013 also stores various types of information received from the external device in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001.

(Summary of Embodiments)

As described above, according to the embodiment of the present invention, a terminal is provided. The terminal includes:

a transmission unit configured to transmit a signal for positioning in device-to-device direct communication to another terminal;

a reception unit configured to receive a result of a measurement of the signal for positioning from the other terminal; and

a control unit configured to assume that the result of the measurement is a difference between a reception timing of the signal for positioning in the other terminal and a reference time,

wherein the control unit determines the reference time based on a synchronization source.

With the above configuration, the terminal 20 can acquire the position information of the terminal 20 by transmitting and receiving the signal for positioning using the sidelink signal and performing measurement by applying the reference time based on the synchronization source. That is, the position information of the terminal 20 itself can be acquired by the device-to-device direct communication.

When a synchronization source is a global navigation satellite system (GNSS), the control unit may determine a synchronization timing based on the GNSS as the reference time. With this configuration, the terminal 20 can acquire the position information of the terminal 20 itself by transmitting and receiving the signal for positioning using the sidelink signal and performing measurement by applying the reference time based on the synchronization source.

The control unit may determine a transmission timing of the other terminal as the reference time when a synchronization source is a base station or a synchronization reference terminal. With this configuration, the terminal 20 can acquire the position information of the terminal 20 itself by transmitting and receiving the signal for positioning using the sidelink signal and performing measurement by applying the reference time based on the synchronization source.

The reception unit may receive the signal for positioning from the other terminal, and the control unit may measure a difference between a reception timing of the signal for positioning received from the other terminal and the reference time. With this configuration, the terminal 20 can acquire the position information of the terminal 20 itself by transmitting and receiving the signal for positioning using the sidelink signal and performing measurement by applying the reference time based on the synchronization source.

The control unit may calculate the position of the terminal based on the result of the measurement received from the other terminal and the measured difference. With this configuration, the terminal 20 can acquire the position information of the terminal 20 itself by transmitting and receiving the signal for positioning using the sidelink signal and performing measurement by applying the reference time based on the synchronization source.

According to an embodiment of the present invention, a positioning method performed by a terminal is provided. The positioning method includes:

a transmission procedure of transmitting a signal for positioning in device-to-device direct communication to another terminal;

a reception procedure of receiving a result of a measurement of the signal for positioning from the other terminal;

a control procedure of assuming that the result of the measurement is a difference between a reception timing of the signal for positioning in the other terminal and a reference time; and

a determination procedure of determining the reference time based on a synchronization source.

With the above configuration, the terminal 20 can acquire the position information of the terminal 20 itself by transmitting and receiving the signal for positioning using the sidelink signal and performing measurement by applying the reference time based on the synchronization source. That is, the position information of the terminal 20 itself can be acquired by the device-to-device direct communication.

(Supplement to Embodiment)

Although the embodiments of the present invention have been described above, the disclosed invention is not limited to such embodiments, and those skilled in the art will understand various modifications, revisions, alternatives, substitutions, and the like. Although the description has been given using specific numerical examples to facilitate understanding of the invention, the numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operations of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be implemented by hardware, software, or a combination thereof. Software operated by a processor included in the base station 10 according to the embodiments of the present invention, and software operated by a processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is not limited to the aspects/embodiments described in the present disclosure, and may be performed using other methods. For example, the indication of information may be performed by physical layer signaling (for example, downlink control information (DCI) and uplink control information (UCI)), upper layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be referred to as, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system which is extended, modified, generated, and stipulated based thereon. Further, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, or the like), at least one of the wired and wireless technologies is included within the definition of the transmission medium.

Information, signals, and the like described in the present disclosure may be represented using any one of a variety of different techniques. For example, data, an instruction, a command, information, a signal, a bit, a symbol, a chip, and the like which may be mentioned throughout the above description may be represented by a voltage, a current, an electromagnetic wave, a magnetic field or a particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be represented using an absolute value, may be represented using a relative value from a predetermined value, or may be represented using another piece of corresponding information. For example, a radio resource may be indicated by an index.

The names used for parameters described above are not limitative names in any way. Furthermore, mathematical formulas and the like using the parameters may be different from those explicitly disclosed in the present disclosure. Since various channels (for example, PUCCH, PDCCH, and the like) and information elements can be identified by any suitable names, various names assigned to the various channels and information elements are not limitative names in any way.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or more (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station and the base station subsystem that performs communication service in the coverage.

In the present disclosure, the transmission of information from the base station to the terminal may be read as the base station instructing the terminal to perform control and operation based on the information.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a transmission device, a reception device, a communication device, or the like. Note that at least one of the base station and the mobile station may be a device mounted on a mobile object, the mobile object itself, or the like. The mobile object is a movable object, and the moving speed is arbitrary. The mobile object may be stopped. Examples of the mobile object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. The mobile object may be a mobile object that autonomously travels based on an operation command. The mobile object may be a vehicle (for example, a car, an airplane, or the like), a mobile object which is movable without human intervention (for example, a drone, a self-driving vehicle, or the like), or a robot (manned type or unmanned type). Note that at least one of the base station and the mobile station includes a device which does not necessarily move during communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication between a plurality of terminals 20 (for example, may be referred to as device-to-device (D2D), vehicle-to-everything (V2X), or the like). Here, the terminal 20 may have a function of the base station 10 described above. In addition, words such as "upstream" and "downstream" may be replaced with words corresponding to device-to-device communication (for example, "side"). For example, an uplink channel, a downlink channel, and the like may be replaced with a side channel.

Similarly, the user terminal in the present disclosure may be replaced with the base station. Here, the base station may have a function of the user terminal described above.

The terms "deciding" and "determining" used in the present disclosure may encompass a wide variety of actions. The terms "deciding" and "determining" may include considering, as "deciding" and "determining", what has been, for example, judged, calculated, computed, processed, derived, investigated, searched (looking up, search, inquiry) (for example, searched in a table, a database, or another data structure), and ascertained. Furthermore, "deciding" and "determining" may include considering, as "deciding" and "determining", what has been received (for example, receiving information), transmitted (for example, transmitting information), inputting, outputting, and accessed (for example, accessing data in a memory). In addition, "deciding" and "determining" may include considering, as "deciding" and "determining", what has been resolved, selected, chosen, established, compared, and the like. That is, "deciding" and "determining" may include considering some operations as being "decided" or "determined". Further, "deciding (determining)" may be replaced with "assuming", "expecting", "considering", or the like.

The terms "connected", "coupled", or any variation thereof mean any direct or indirect connection or coupling between two or more elements, and one or more intermediate elements may exist between two elements which are "connected" or "coupled" to each other. The coupling or connection between the elements may be physical, logical, or a combination thereof. For example, "connection" may be replaced with "access". As used in the disclosure, two elements can be considered to be "connected" or "coupled" to each other using at least one of one or more wires, cables, and printed electric connections, and as some nonlimiting and non-inclusive examples, using electromagnetic energy having wavelengths in a radio frequency domain, a microwave region, and a light (both visible and invisible) region, and the like.

The reference signal may be abbreviated as RS, or may be referred to as a pilot according to an applied standard.

As used in the disclosure, the phrase "based on" does not mean "based only on", unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, the terms are intended to be inclusive in a manner similar to the term "comprising". Furthermore, the term "or" used in the present disclosure is intended not to be an exclusive OR.

A radio frame may be configured with one or more frames in a time domain. Each of one or more frames in the time domain may be referred to as a sub-frame. The sub-frame may be further configured with one or more slots in the time domain. The sub-frame may be a fixed time length (for example, 1 ms) which is independent of numerology.

The numerology may be a communication parameter applied to at least one of transmission/reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or more symbols in the time domain. Further, the mini-slot may be referred to as a sub-slot. The mini-slot may be configured with a smaller number of symbols than the slot. PDSCH (or PUSCH) transmitted in a time unit larger than the mini-slot may be referred to as a PDSCH (or PUSCH) mapping type A. PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period of time shorter than 1 ms (for example, 1 to 13 symbols), or a period of time longer than 1 ms. Note that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (a transport block), a code block, or a code word, or may be a processing unit such as scheduling or link adaptation. Note that, when a TTI is given, a time interval (for example, the number of symbols) in which the transport block, the code block, the code word, or the like is actually mapped may be shorter than the TTI.

Note that, when one slot or one mini-slot is referred to as the TTI, one or more TTIs (that is, one or more slots or one or more mini-slots) may be the minimum time unit of scheduling. Furthermore, the number of slots (the number of mini-slots) configuring the minimum time unit of the scheduling may be controlled.

A TTI with a time length of 1 ms may be referred to as a general TTI (TTI in LTE Rel. 8 to 12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

Note that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and a length of 1 ms or more.

The resource block (RB) is a resource allocation unit in the time domain and the frequency domain, and may include one or a plurality of consecutive sub-carriers in the frequency domain. The number of sub-carriers included in the RB may be the same regardless of the numerology, and for example, may be 12. The number of sub-carriers included in the RB may be determined based on the numerology.

In addition, the time domain of the RB may include one or more symbols, and may be a length of one slot, one mini-slot, one sub-frame, or one TTI. Each of one TTI, one sub-frame, and the like may be configured with one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as a partial bandwidth or the like) may represent a subset of contiguous common resource blocks (common RBs) for a numerology in a carrier. Here, the common RB may be specified by an index of the RB based on the common reference point of the carrier. The PRB may be defined by a certain BWP and numbered inside the BWP.

The BWP may include a BWP for UL (UL BWP) and a BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that a "cell", a "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per subframe or radio frame, the number of mini-slots included in the slot, the number of symbols and RBs included in the slot or the mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following the articles is a plural form.

In the present disclosure, the term "A and B are different" may mean "A and B are different from each other". Note that the term may mean that "A and B are different from C". Terms such as "separated" and "coupled" may be interpreted in the same manner as "different".

Each aspect/embodiment described in the present disclosure may be used alone, used in combination, or used by being switched with execution. Furthermore, indication of predetermined information (for example, indication of "being X") is not limited to being performed explicitly, and may be performed implicitly (for example, the predetermined information is not indicated).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, description of the present disclosure is given for the purpose of illustration and does not have any restrictive meaning to the present disclosure.

Reference Signs List

| | |
|---|---|
| 10 | base station |
| 110 | transmission unit |
| 120 | reception unit |
| 130 | setting unit |
| 140 | control unit |
| 20 | terminal |
| 210 | transmission unit |
| 220 | reception unit |
| 230 | setting unit |
| 240 | control unit |
| 1001 | processor |
| 1002 | storage device |
| 1003 | auxiliary storage device |
| 1004 | communication device |
| 1005 | input device |
| 1006 | output device |
| 2001 | vehicle |
| 2002 | drive unit |
| 2003 | steering unit |
| 2004 | accelerator pedal |
| 2005 | brake pedal |
| 2006 | shift lever |
| 2007 | front wheel |
| 2008 | rear wheel |
| 2009 | axle |
| 2010 | electronic control unit |
| 2012 | information service unit |
| 2013 | communication module |

2021    current sensor
2022    rotation speed sensor
2023    air pressure sensor
2024    vehicle speed sensor
2025    acceleration sensor
2026    brake pedal sensor
2027    shift lever sensor
2028    object detection sensor
2029    accelerator pedal sensor
2030    driving assistance system unit
2031    microprocessor
2032    memory (ROM, RAM)
2033    communication port (IO port)

**Claims**

1. A terminal comprising:

   a transmission unit configured to transmit a signal for positioning in device-to-device direct communication to another terminal;
   a reception unit configured to receive a result of a measurement of the signal for positioning from the other terminal; and
   a control unit configured to assume that the result of the measurement is a difference between a reception timing of the signal for positioning in the other terminal and a reference time,
   wherein the control unit determines the reference time based on a synchronization source.

2. The terminal according to claim 1, wherein, when a synchronization source is a global navigation satellite system (GNSS), the control unit determines a synchronization timing based on the GNSS as the reference time.

3. The terminal according to claim 1, wherein, when a synchronization source is a base station or a synchronization reference terminal, the control unit determines a synchronization timing of the other terminal as the reference time.

4. The terminal according to claim 1, wherein the reception unit receives the signal for positioning from the other terminal, and
   the control unit measures the difference between the reception timing of the signal for positioning received from the other terminal and the reference time.

5. The terminal according to claim 4, wherein the control unit calculates a position of the terminal, based on the result of the measurement received from the other terminal and the measured difference.

6. A positioning method performed by a terminal, the positioning method comprising:

a transmission procedure of transmitting a signal for positioning in device-to-device direct communication to another terminal;
a reception procedure of receiving a result of a measurement of the signal for positioning from the other terminal;
a control procedure of assuming that the result of the measurement is a difference between a reception timing of the signal for positioning in the other terminal and a reference time; and
a determination procedure of determining the reference time based on a synchronization source.

# FIG.1

EP 4 509 874 A1

FIG.2

V2V
(Vehicle to Vehicle)

V2I
(Vehicle to Infrastructure)

Road side unit (RSU)

V2N
(Vehicle to Network)

ITS server

V2P
(Vehicle to Pedestrian)

# FIG.3

RESOURCE POOL

FREQUENCY

#A
#C
#B
#D

#B to #D

#A to #B

#A to #C

#C to #A

#D to #C

SUB-CHANNEL

SLOT

TIME

ONE OF TRANSMISSION AND
RECEPTION IS DROPPED DUE TO
HALF-DUPLEX COMMUNICATION

TRANSIENT PERIOD/
AGC

TRANSMISSION/
RECEPTION SWITCHING

EP 4 509 874 A1

# FIG.4

# FIG.5

SYMBOL

DL TRANSMISSION FROM TRP0 | PRS

DL RECEPTION FROM TRP0 AT UE | PRS

RSTD

DL RECEPTION FROM TRP1 AT UE | PRS

DL TRANSMISSION FROM TRP1 | PRS

# FIG.6

SYMBOL

UL TRANSMISSION FROM UE | | | SRS | | |

UL RECEPTION AT TRP0 | | | SRS | | |

REFERENCE TIME

RTOA

UL RECEPTION AT TRP1 | | | SRS | | |

REFERENCE TIME

RTOA

EP 4 509 874 A1

# FIG.7

# FIG.8

SYMBOL

DL TRANSMISSION FROM TRP0 | | | PRS | | |

DL RECEPTION AT UE | | | PRS | | |

UE RECEPTION–TRANSMISSION TIME DIFFERENCE

UL TRANSMISSION FROM UE | | | SRS | | |

UL RECEPTION AT TRP0 | | | SRS | | |

gNB RECEPTION–TRANSMISSION TIME DIFFERENCE

EP 4 509 874 A1

# FIG.9

START

S11

UE-X TRANSMITS PREDETERMINED SIGNAL TO UE-Y

S12

UE-Y MEASURES PREDETERMINED VALUE BASED ON THE PREDETERMINED SIGNAL

S13

UE-Y TRANSMITS INFORMATION INCLUDING MEASURED VALUE AND/OR INFORMATION BASED ON MEASURED VALUE TO UE-X

S14

UE-X CALCULATES POSITION OF UE-X ITSELF BASED ON INFORMATION RECEIVED FROM UE-Y

END

# FIG.10

UE-Y3

UE-X

UE-Y1          UE-Y2

STEP S11

STEP S13

FIG.11

Legend:
- 1st-stage SCI (PSCCH)
- 2nd-stage SCI (PSSCH)
- DMRS
- SL-SCH (PSSCH)
- SL-PRS

2 OR 3 SYMBOLS

{10, 12, 15, 20, 25} PRBs

PRB

SUB-CHANNEL

COPY FOR AGC

SYMBOL

GAP FOR TRANSMISSION/ RECEPTION SWITCHING

SUB-CARRIER

SUB-CARRIER

SL-PRS MAPPING EXAMPLE

# FIG.12

START

S21

UE-X TRANSMITS PREDETERMINED SIGNAL
TO UE-Y AND/OR BS-Y

S22

UE-Y AND/OR BS-Y MEASURE PREDETERMINED VALUE
BASED ON THE PREDETERMINED SIGNAL

S23

UE-Y AND/OR BS-Y TRANSMIT INFORMATION INCLUDING
MEASURED VALUE AND/OR INFORMATION
BASED ON MEASURED VALUE TO UE-X

S24

UE-X CALCULATES POSITION OF UE-X ITSELF
BASED ON INFORMATION RECEIVED FROM UE-Y AND/OR BS-Y

END

# FIG.13

BS-Y

UE-X

UE-Y1          UE-Y2

——— STEP S21
----- STEP S23

# FIG.14

START

UE-X TRANSMITS POSITION INFORMATION REQUEST TO BS          S31

BS EXECUTES OPERATION FOR
POSITION INFORMATION ACQUISITION          S32

BS TRANSMITS POSITION INFORMATION TO UE-X          S33

END

# FIG.15

BS-Y

| —— | STEP S31 |
| ---- | STEP S33 |

UE-X

# FIG.16

START

S41
UE-A TRANSMITS POSITION INFORMATION REQUEST TO UE-B

S42
UE-B EXECUTES OPERATION FOR
POSITION INFORMATION ACQUISITION

S43
UE-B TRANSMITS POSITION INFORMATION TO UE-A

END

# FIG.17

UE-Y3

UE-A

UE-B/UE-X

UE-Y1          UE-Y2

——— STEP S41

········ STEP S42

----- STEP S43

# FIG.18

START

S51

UE-A TRANSMITS POSITION INFORMATION REQUEST RELATED
TO UE-B TO BS

S52

BS EXECUTES OPERATION FOR
POSITION INFORMATION ACQUISITION RELATED
TO UE-B

S53

BS TRANSMITS POSITION INFORMATION RELATED
TO UE-B TO UE-A

END

# FIG.19

| | |
|---|---|
| —— | STEP S51 |
| ···· | STEP S52 |
| ---- | STEP S53 |

# FIG.20

TRP0 DL TRANSMISSION

UE DL RECEPTION

TRP0 UL RECEPTION

TRP1 DL TRANSMISSION

UE DL RECEPTION

TRP1 UL RECEPTION

UE UL TRANSMISSION

SL-PRS

UL RTOA (TRP1)

TA

REFERENCE TIME

# FIG.21

UE-Y1 SL TRANSMISSION

UE-X RECEIVES SL
TRANSMISSION FROM UE-Y1

UE-Y1 RECEIVES SL
TRANSMISSION FROM UE-X

UE-Y2 SL TRANSMISSION

UE-X RECEIVES SL
TRANSMISSION FROM UE-Y2

UE-Y2 RECEIVES SL
TRANSMISSION FROM UE-X

UE-X SL TRANSMISSION

SL-PRS

SL RTOA (UE-Y1)

SL RTOA (UE-Y2)

REFERENCE TIME

# FIG.22

eNB/gNB/Ref-UE

UE-Y1 SL TRANSMISSION — SL-PRS

UE-X RECEIVES SL TRANSMISSION FROM UE-Y1 — $\Delta t$

UE-Y1 RECEIVES SL TRANSMISSION FROM UE-X

UE-Y2 SL TRANSMISSION

UE-X RECEIVES SL TRANSMISSION FROM UE-Y2

UE-Y2 RECEIVES SL TRANSMISSION FROM UE-X

UE-X SL TRANSMISSION — SL-PRS

$\Delta t_{sync}$

SL RTOA (UE-Y1) = $\Delta t1$        SL RTOA (UE-X) = $\Delta t2$

REFERENCE TIME          REFERENCE TIME

EP 4 509 874 A1

# FIG.23

COMMUNICATION UNIT

TRANSMISSION UNIT /110

RECEPTION UNIT /120

SETTING UNIT /130

CONTROL UNIT /140

/10

# FIG.24

COMMUNICATION UNIT

TRANSMISSION UNIT /210

RECEPTION UNIT /220

SETTING UNIT /230

CONTROL UNIT /240

/20

# FIG.25

FIG.26

EP 4 509 874 A1

<table>
<tr><td colspan="2" align="center">**INTERNATIONAL SEARCH REPORT**</td><td colspan="2">International application No.<br><br>**PCT/JP2022/017971**</td></tr>
<tr><td colspan="4">**A.    CLASSIFICATION OF SUBJECT MATTER**<br><br>*G01S 11/08*(2006.01)i; *G01S 5/14*(2006.01)i; *G01S 13/74*(2006.01)i<br>FI:    G01S11/08; G01S5/14; G01S13/74<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br><br>G01S5/00 - G01S5/14; G01S11/02 - G01S11/10; G01S13/74 - G01S13/84; G01S19/00 - G01S19/55; H04B7/24 - H04B7/26; H04W4/00 - H04W99/00</td></tr>
<tr><td colspan="4">Documentation searched other than minimum documentation to the extent that such documents are included in the fields searched<br><br>Published examined utility model applications of Japan 1922-1996<br>Published unexamined utility model applications of Japan 1971-2022<br>Registered utility model specifications of Japan 1996-2022<br>Published registered utility model applications of Japan 1994-2022</td></tr>
<tr><td colspan="4">Electronic data base consulted during the international search (name of data base and, where practicable, search terms used)</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | JP 2015-525503 A (QUALCOMM INCORPORATED) 03 September 2015 (2015-09-03)<br>paragraphs [0067]-[0068], [0107]-[0112], fig. 5, 12 | 1-6 |
| Y | US 2020/0045660 A1 (LG ELECTRONICS INC.) 06 February 2020 (2020-02-06)<br>paragraphs [0114]-[0121], fig. 6 | 1-6 |
| A | WO 2016/060177 A1 (NTT DOCOMO INC) 21 April 2016 (2016-04-21)<br>paragraphs [0022]-[0066], fig. 2-8 | 1-6 |
| A | JP 2020-150536 A (TOYOTA MOTOR CORP) 17 September 2020 (2020-09-17)<br>paragraphs [0025]-[0071], fig. 1-5 | 1-6 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br><br>**17 June 2022** | Date of mailing of the international search report<br><br>**05 July 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/017971**

| Patent document cited in search report | | | Publication date (day/month/year) | Patent family member(s) | | | Publication date (day/month/year) |
|---|---|---|---|---|---|---|---|
| JP | 2015-525503 | A | 03 September 2015 | US | 2013/0316727 | A1 | |
| | | | | paragraphs [0079]-[0080], [0119]-[0124], fig. 5, 12 | | | |
| | | | | WO | 2013/176999 | A1 | |
| | | | | CN | 104396298 | A | |
| US | 2020/0045660 | A1 | 06 February 2020 | WO | 2018/070845 | A1 | |
| | | | | EP | 3512267 | A1 | |
| | | | | CN | 109804679 | A | |
| WO | 2016/060177 | A1 | 21 April 2016 | US | 2017/0244501 | A1 | |
| | | | | paragraphs [0047]-[0096], fig. 2-8 | | | |
| | | | | EP | 3208631 | A1 | |
| JP | 2020-150536 | A | 17 September 2020 | US | 2020/0258320 | A1 | |
| | | | | paragraphs [0025]-[0071], fig. 1-5 | | | |
| | | | | CN | 111556463 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.211 V16.8.0*, December 2021
- *3GPP TR 22.886 V15.1.0*, March 2017
- *3GPP TS 38.305 V16.7.0*, December 2021
- *3GPP TS 38.455 V16.6.0*, December 2021
- *3GPP TS 37.355 V16.7.0*, December 2021
- *3GPP TS 23.032 V16.1.0*, December 2021
- *3GPP TS 38.215 V16.4.0*